# EUROPEAN PATENT SPECIFICATION

(11) **EP 2 910 820 B1**
(45) Date of publication and mention of the grant of the patent: **18.10.2017**
(21) Application number: 15155360.9
(22) Date of filing: 17.02.2015
(51) Int. Cl.: F16H 9/18, F16H 63/06, F16H 57/031, F16H 57/035, F16H 57/04, F16H 59/38, B62M 7/12, F16H 57/02

(54) **V-belt continuously variable transmission for saddle-ride type vehicle**
Stufenloses Keilriemengetriebe für Grätschsitzfahrzeug
Transmission variable continue pour véhicules du type à enfourcher

(30) Priority: 24.02.2014 JP 2014033246; 24.02.2014 JP 2014033247
(43) Date of publication of application: 26.08.2015
(73) Proprietor: HONDA MOTOR CO., LTD., Tokyo, 107-8556 (JP)
(72) Inventor: Takiguchi, Chikashi, Saitama, 351-0193 (JP); Inomoto, Yutaka, Saitama, 351-0193 (JP); Suzuki, Hitoshi, Saitama, 351-0193 (JP)
(74) Representative: Brevalex

(56) References cited:
- EP-A1- 1 770 307
- EP-A1- 1 840 417
- EP-A1- 2 019 233
- EP-A2- 1 521 017
- JP-B2- 5 230 485

## Description

### Technical Field

The present invention relates to a V-belt continuously variable transmission for a saddle-ride type vehicle, and especially relates to a cooling structure for a V-belt continuously variable transmission performing shift transmission by driving a motor.

### Background Art

As a V-belt continuously variable transmission for a saddle-ride type vehicle, a V-belt continuously variable transmission has been generally known (see, for example, JP Patent No. 5230485), the V-belt continuously variable transmission having such a structure that a drive shaft and a driven shaft that are directed to a vehicle width direction are arranged in a longitudinal direction in a belt transmission chamber formed between a transmission case arranged inside in the vehicle width direction and a transmission case cover arranged outside in the vehicle width direction and a V-belt is wound between a drive pulley journaled to the drive shaft and a driven pulley journaled to the driven shaft, and performing shift transmission by a change in a winding diameter with respect to the drive pulley by driving a motor.

In the V-belt continuously variable transmission for the saddle-ride type vehicle disclosed in JP 5230485 B2, which discloses a transmission according to the preamble of claim 1, a motor unit is attached to the transmission case cover. For this reason, access to the motor unit is facilitated, and maintainability is excellent.

### Summary of Invention

### Technical Problem

Heat generation due to rotation of a V-belt wound between a drive pulley and a driven pulley of a V-belt continuously variable transmission rises temperature in a belt transmission chamber. In addition, in a motor unit attached to a transmission case cover, a power transmission part for moving a rotating movable drive pulley half body of the drive pulley in an axial direction is located in the belt transmission changer. As a result, heat is generated. Further, heat generation due to driving of a motor is added. Consequently, temperature in the belt transmission chamber easily rises more and more.

In view of this, it is necessary to efficiently cool, especially the motor unit and the power transmission part that are easily raised to high temperature.

Here, when the belt transmission chamber is cooled, it is conceivable that cooling air is introduced from the outside into the belt transmission chamber. This makes it possible to introduce the cooling air. On the other hand, if the cooling air introduced into the belt transmission chamber is not smoothly discharged, introduction of the cooling air is also prevented. As a result, it becomes difficult to efficiently cool the parts to be cooled in the belt transmission chamber.

The present invention has been achieved in view of the above-mentioned circumstances, and an object of the present invention is to provide a V-belt continuously variable transmission for a saddle-ride type vehicle, that can efficiently cool parts to be cooled in a belt transmission chamber, especially a motor unit and a power transmission part, by smoothly discharging cooling air.

### Solution to Problem

In order to achieve the above-mentioned object, there is provided a V-belt continuously variable transmission for a saddle-ride type vehicle in which
a drive pulley that is journaled to a drive shaft directed to a vehicle width direction, a driven pulley that is journaled to a driven shaft arranged in parallel to the drive shaft, a V-belt that is wound between the drive pulley and the driven pulley, and a centrifugal clutch that is journaled to the driven shaft and that transmits power from the driven pulley to a side of a rear wheel, are stored in a belt transmission chamber formed inside by a transmission case and a transmission case cover for covering the transmission case from an outer side in the vehicle width direction, and
a motor unit that adjusts a width of a groove of the drive pulley is attached to the transmission case cover with at least a part of the motor unit arranged within the belt transmission chamber.

The transmission case cover is formed with
a clutch housing portion that covers an outer side of the centrifugal clutch in the vehicle width direction,
a motor unit mounting portion that is positioned in front of the clutch housing portion and that is mounted with the motor unit,
a cooling air introduction port that is positioned in front of the motor unit mounting portion and that introduces cooling air into the belt transmission chamber, and
a cooling air discharge port that is positioned between the motor unit mounting portion and the clutch housing portion and that discharges the cooling air in the belt transmission chamber to the outside.

According to another aspect of the invention,
in the V-belt continuously variable transmission for the saddle-ride type vehicle,
an exhaust air duct that extends upward cylindrically with the cooling air discharge port as a lower end opening is formed in a sidewall portion of the transmission case cover, and
the exhaust air duct is formed in a position with the exhaust air duct overlapping with the centrifugal clutch in the vehicle width direction.

According to another aspect of the invention,
in the V-belt continuously variable transmission for the saddle-ride type vehicle,
a body of an internal combustion engine is continuously provided to a front portion of the transmission case to form a power unit,
the power unit is swingably provided with a front portion thereof journaled to a vehicle body frame, and
the cooling air introduction port, the motor unit mounting portion, the exhaust air duct, and the clutch housing portion are arranged on a plane including an axis of the drive shaft and an axis of the driven shaft.

According to another aspect of the invention,
in the V-belt continuously variable transmission for the saddle-ride type vehicle,
a rearwardly bulging portion formed by rearwardly bulging a part of the exhaust air duct overlaps with an outer peripheral edge of the driven pulley when viewed in an axis direction of the driven shaft.

According to another aspect of the invention,
in the V-belt continuously variable transmission for the saddle-ride type vehicle,
a bolt fastening bearing surface for fastening the transmission case cover and the transmission case to each other is formed on an end surface of a fastening boss that is positioned between the motor unit mounting portion and the exhaust air duct and that is formed to project from an inner surface of the sidewall portion of the transmission case cover, and
a forwardly bulging portion formed by forwardly bulging a part of the exhaust air duct overlaps with the bolt fastening bearing surface when viewed from the axis direction of the driven shaft.

According to another aspect of the invention,
in the V-belt continuously variable transmission for the saddle-ride type vehicle,
a rotational speed sensor for detecting a rotational speed of the driven pulley is attached to the transmission case cover.

According to another aspect of the invention,
in the V-belt continuously variable transmission for the saddle-ride type vehicle,
a second cooling air discharge port for discharging the cooling air in the belt transmission chamber to the outside is formed behind the centrifugal clutch.

According to another aspect of the invention,
in the V-belt continuously variable transmission for the saddle-ride type vehicle,
the exhaust air duct is provided with an external bulging wall that bulges outside in the vehicle width direction in comparison with the motor unit mounting portion,
a motor harness extending from the motor unit is arranged in the vicinity of the exhaust air duct on an outer side of the transmission case cover, and
substantially the whole motor harness is arranged inside in the vehicle with direction in comparison with an outermost portion of the external bulging wall of the exhaust air duct in the vehicle width direction.

According to another aspect of the invention,
in the V-belt continuously variable transmission for the saddle-ride type vehicle,
an air guide duct is attached to the cooling air introduction port, and
the air guide duct is provided with a partition wall for partitioning the cooling air introduction port from the motor unit.

According to another aspect of the invention,
in the V-belt continuously variable transmission for the saddle-ride type vehicle,
an outside air intake formed in the air guide duct is formed above the cooling air introduction port, and
an outside air intake space with the outside air intake facing is formed to bulge inside in the vehicle width direction in comparison with the cooling air introduction port.

According to another aspect of the invention,
in the V-belt continuously variable transmission for the saddle-ride type vehicle,
the transmission case cover is formed with a curved recessed portion that has a curved surface bulging toward a side of the belt transmission chamber, and
the motor unit is attached from the outside to a curved bottom of the curved recessed portion.

According to another aspect of the invention,
in the V-belt continuously variable transmission for the saddle-ride type vehicle,
the motor unit mounting portion for the motor unit, having a mounting bearing surface formed as a flat surface, is provided at the curved bottom of the curved recessed portion.

According to another aspect of the invention,
in the V-belt continuously variable transmission for the saddle-ride type vehicle,
the curved recessed portion is formed to have a curved surface that is curved in a direction of a vertical width of the transmission case cover, and
the center of the vertical width of the curved recessed portion is positioned in the vicinity of the plane including both the axes of the drive shaft and the driven shaft that are arranged in a longitudinal direction.

According to another aspect of the invention,
in the V-belt continuously variable transmission for the saddle-ride type vehicle,
the transmission case cover is provided with a peripheral wall portion that has a coupling face with respect to the transmission case to extend an outer periphery of the V-belt toward the outer side in the vehicle width direction, and the sidewall portion that extends inside of the peripheral wall portion to cover the V-belt from the outer side in the vehicle width direction, and
the curved recessed portion is formed over the whole vertical width of the sidewall portion.

According to another aspect of the invention,
in the V-belt continuously variable transmission for the saddle-ride type vehicle,
an outermost cover member for covering the outer side of the transmission case cover is attached to the transmission case cover, and
at least a part of the motor unit is arranged in a space formed between the curved recessed portion and the outermost cover member.

### Advantageous Effects of Invention

With the V-belt continuously variable transmission for the saddle-ride type vehicle according to the invention, the V-belt continuously variable transmission for the saddle-ride type vehicle is configured such that the motor unit that adjusts the width of the groove of the drive pulley is attached to the transmission case cover with at least a part of the motor unit arranged within the belt transmission chamber. In the V-belt continuously variable transmission for the saddle-ride type vehicle, the transmission case cover is formed with the clutch housing portion that covers the outer side of the centrifugal clutch in the vehicle width direction, the motor unit mounting portion that is positioned in front of the clutch housing portion and that is mounted with the motor unit, the cooling air introduction port that is positioned in front of the motor unit mounting portion and that introduces cooling air into the belt transmission chamber, and the cooling air discharge port that is positioned between the motor unit mounting portion and the clutch housing portion and that discharges the cooling air in the belt transmission chamber to the outside. With this arrangement, the cooling air introduced from the cooling air introduction port formed in front of the motor unit mounted to the motor unit mounting portion can cool the drive pulley, and also can effectively cool the motor unit behind the drive pulley and the periphery of the motor unit.

Further, the cooling air having cooled the motor unit and the like and led to flow rearward is divided into cooling air that is directly introduced as it is to the cooling air discharge port arranged behind the motor unit and cooling air that is led to flow rearward with respect to the cooling air discharge port. The cooling air led to flow rearward with respect to the cooling air discharge port cools the driven pulley and the centrifugal clutch, is dragged by rotation of the centrifugal clutch, circles, and is introduced to the cooling air discharge port in front of the centrifugal clutch. For this reason, the cooling air in the belt transmission chamber is extremely efficiently discharged from the cooling air discharge port (87) to the outside. Since also introduction of the cooling air from the cooling air introduction port (83) into the belt transmission chamber can be smoothly performed without any trouble, great cooling effect can be expected by an increase in a flow rate of the cooling air.

The cooling air introduction port and the cooling air discharge port are provided in the longitudinal direction so as to sandwich the motor unit therebetween. For this reason, cooling efficiency of, especially, the motor unit and the periphery thereof, can be increased.

With the V-belt continuously variable transmission for the saddle-ride type vehicle according to one aspect of the invention, the exhaust air duct that extends upward cylindrically with the cooling air discharge port as the lower end opening is formed in the sidewall portion of the transmission case cover, and the exhaust air duct is formed in a position where the exhaust air duct overlaps with the centrifugal clutch in the vehicle width direction. For this reason, enlargement of the transmission case cover in the vehicle width direction can be prevented, and a sufficient bank angle of a saddle-ride type vehicle can be ensured. In addition, the cooling air dragged by the rotation of the centrifugal clutch can be easily introduced to the exhaust air duct.

With the V-belt continuously variable transmission for the saddle-ride type vehicle according to another aspect of the invention, the body of the internal combustion engine is continuously provided to the front portion of the transmission case to form the power unit, the power unit is swingably provided with the front portion thereof journaled to the vehicle body frame, and the cooling air introduction port, the motor unit mounting portion, the exhaust air duct, and the clutch housing portion are arranged on the plane including the axis of the drive shaft and the axis of the driven shaft. With this arrangement, the cooling air introduction port, the motor unit, the exhaust air duct, and the centrifugal clutch are juxtaposed in the longitudinal direction. For this reason, the vertical width of the power unit can be reduced, and the sufficient amount of swing of the power unit can be ensured.

With the V-belt continuously variable transmission for the saddle-ride type vehicle according to another aspect of the invention, the rearwardly bulging portion formed by rearwardly bulging a part of the exhaust air duct overlaps with the outer peripheral edge of the driven pulley when viewed in the axis direction of the driven shaft. With this arrangement, while miniaturization of the power unit in the longitudinal direction can be achieved, an increase in volume of the exhaust air duct can be ensured. For this reason, exhaust air efficiency can be improved.

With the V-belt continuously variable transmission for the saddle-ride type vehicle according to another aspect of the invention, the bolt fastening bearing surface for fastening the transmission case cover and the transmission case to each other is formed on the end surface of the fastening boss that is positioned between the motor unit mounting portion and the exhaust air duct and that is formed to project from the inner surface of the sidewall portion of the transmission case cover, and the forwardly bulging portion that ensures rigidity of the motor unit mounting portion mounted with the motor unit as a heavy load and that is formed by forwardly bulging a part of the exhaust air duct arranged behind the motor unit mounting portion overlaps with the bolt fastening bearing surface when viewed from the axis direction of the driven shaft. With this arrangement, while miniaturization of the power unit in the longitudinal direction can be achieved, the increase in volume of the exhaust air duct can be ensured. For this reason, the exhaust air efficiency can be improved.

With the V-belt continuously variable transmission for the saddle-ride type vehicle according to another aspect of the invention, the rotational speed sensor for detecting the rotational speed of the driven pulley is attached to the transmission case cover. With this arrangement, both the motor unit and the rotational speed sensor are attached to the transmission case cover. For this reason, access to both the motor unit and the rotational speed sensor can be facilitated, and maintainability can be further improved.

With the V-belt continuously variable transmission for the saddle-ride type vehicle according to another aspect of the invention, the second cooling air discharge port for discharging the cooling air in the belt transmission chamber to the outside is formed behind the centrifugal clutch. With this arrangement, the cooling air in the belt transmission chamber is discharged from the first cooling air discharge port formed between the motor unit mounting portion and the clutch housing portion, and is also discharged from the second cooling air discharge port formed behind the centrifugal clutch. For this reason, the exhaust air efficiency can be further improved.

With the V-belt continuously variable transmission for the saddle-ride type vehicle according to another aspect of the invention, the exhaust air duct is provided with the external bulging wall that bulges outside in the vehicle width direction in comparison with the motor unit mounting portion, the motor harness extending from the motor unit is arranged in the vicinity of the exhaust air duct on the outer side of the transmission case cover, and substantially the whole motor harness is arranged inside in the vehicle with direction in comparison with the outermost portion of the external bulging wall of the exhaust air duct in the vehicle width direction. For this reason, the external bulging wall of the exhaust air duct can protect the motor harness from an external factor from the outside in the vehicle width direction.

With the V-belt continuously variable transmission for the saddle-ride type vehicle according to another aspect of the invention, the air guide duct is attached to the cooling air introduction port, and the air guide duct is provided with the partition wall for partitioning the cooling air introduction port from the motor unit. For this reason, when the cooling air is guided to the cooling air introduction port through the air guide duct, the motor unit can be prevented from being a resistance or an obstacle with respect to guiding of air by the partition wall, and the smooth guiding of air to the cooling air introduction port can be achieved.

With the V-belt continuously variable transmission for the saddle-ride type vehicle according to another aspect of the invention, the outside air intake formed in the air guide duct is formed above the cooling air introduction port, and the outside air intake space with the outside air intake facing is formed to bulge inside in the vehicle width direction in comparison with the cooling air introduction port. As a result, an increase in volume of the upper portion of the outside air intake space of the air guide duct with the outside air intake facing can be ensured. For this reason, the outside air can be smoothly taken from the outside air intake into the air guide duct, and an increase in air volume guided to the cooling air introduction port with respect to the belt transmission chamber can be achieved. Consequently, the cooling air volume introduced from the cooling air introduction port into the belt transmission chamber can be increased and the cooling efficiency can be further improved.

With the V-belt continuously variable transmission for the saddle-ride type vehicle according to another aspect of the invention, the transmission case cover is formed with the curved recessed portion that has the curved surface bulging toward the side of the belt transmission chamber, and the motor unit is attached to the curved bottom of the curved recessed portion. With this arrangement, by the curved shape of the curved recessed portion having the curved surface, the rigidity of the motor unit mounting portion formed in the transmission case cover is increased, and the high supporting strength of the motor unit as the heavy load can be retained. In addition, the motor unit is attached to the curved bottom of the curved recessed portion. For this reason, the amount of projection of the motor unit toward the outer side in the vehicle width direction can be also suppressed, and the sufficient bank angle of the saddle-ride type vehicle can be also ensured.

Further, the motor unit is attached to the curved bottom of the curved recessed portion formed of the curved surface. With this arrangement, the periphery of the motor unit attached to the transmission case cover, that is, the peripheral portion of the curved bottom of the curved recessed portion can be made to serve as a wall surface extending so as to be inclined to a direction away from the motor unit. For this reason, a work space can be easily ensured around the motor unit, and the maintainability can be further improved.

With the V-belt continuously variable transmission for the saddle-ride type vehicle, the motor unit is mounted on the flat surface as the mounting bearing surface at the curved bottom of the curved recessed portion. For this reason, in comparison with the case that the motor unit is mounted to the curved surface part, the motor unit can be easily mounted to a desired position. With the V-belt continuously variable transmission for the saddle-ride type vehicle according to another aspect of the invention, the curved recessed portion is formed to have the curved surface that is curved in the direction of the vertical width of the transmission case cover, and the center of the vertical width of the curved recessed portion is positioned in the vicinity of the plane including both the axes of the drive shaft and the driven shaft that are arranged in a longitudinal direction. With this arrangement, the motor unit mounted at the curved bottom of the curved recessed portion is arranged in a center height position between an upper rotating portion and a lower rotating portion of the V-belt (in the vicinity of the plane) by effectively utilizing the space inside of the V-belt annularly rotating and wound between the drive pulley journaled to the drive shaft and the driven pulley journaled to the driven shaft. For this reason, the motor unit can be effectively prevented from interfering with the V-belt fluctuated by a change in the vertical width between the upper rotating portion and the lower rotating portion of the V-belt due to shift transmission and vibration of the V-belt, and also a sufficient shift transmission range can be ensured.

With the V-belt continuously variable transmission for the saddle-ride type vehicle according to another aspect of the invention, the transmission case cover is provided with the peripheral wall portion that has the coupling face with respect to the transmission case to extend the outer periphery of the V-belt toward the outer side in the vehicle width direction, and the sidewall portion that extends inside of the peripheral wall portion to cover the V-belt from the outer side in the vehicle width direction, and the curved recessed portion is formed over the whole vertical width of the sidewall portion. For this reason, the high rigidity can be ensured, and also attachment and/or detachment of the motor unit can be further facilitated.

With the V-belt continuously variable transmission for the saddle-ride type vehicle according to another aspect of the invention, the outermost cover member for covering the outer side of the transmission case cover is attached to the transmission case cover, and at least a part of the motor unit is arranged in the space formed between the curved recessed portion and the outermost cover member. With this arrangement, the space between the outermost cover member and the curved recessed portion is enlarged by the curved recessed portion, and the motor unit is arranged in the enlarged space. For this reason, the outermost cover member for covering the outer side of the motor unit can be suppressed from bulging outside in the vehicle width direction, the bank angle of the saddle-ride type vehicle can be ensured, and the motor unit can be protected from dust or the like with excellent appearance quality kept by the outermost cover member.

### Brief Description of Drawings

Fig. 1 is a left side view of the whole saddle-ride type motorcycle according to an embodiment of the present invention.
Fig. 2 is a left side view of a power unit in Fig. 1.
Fig. 3 is a developed view of a longitudinal section of the power unit (a developed view of a longitudinal section taken along line III-III in Fig. 2 and Fig. 4).
Fig. 4 is a left side view of the power unit with an outermost cover detached.
Fig. 5 is a left side view of a transmission case cover.
Fig. 6 is a back side view (right surface view) of the transmission case cover attached with a motor unit, a rotational speed sensor, a drive pulley, a driven pulley, and the like.
Fig. 7 is a cross-sectional view of the power unit (a sectional view taken along line VII-VII in Fig. 3 and Fig. 4).
Fig. 8 is the cross-sectional view of the power unit (the sectional view taken along line VIII-VIII in Fig. 3 and Fig. 4).
Fig. 9 is the cross-sectional view of the power unit (the sectional view taken along line IX-IX in Fig. 3 and Fig. 4).

### Description of Embodiments

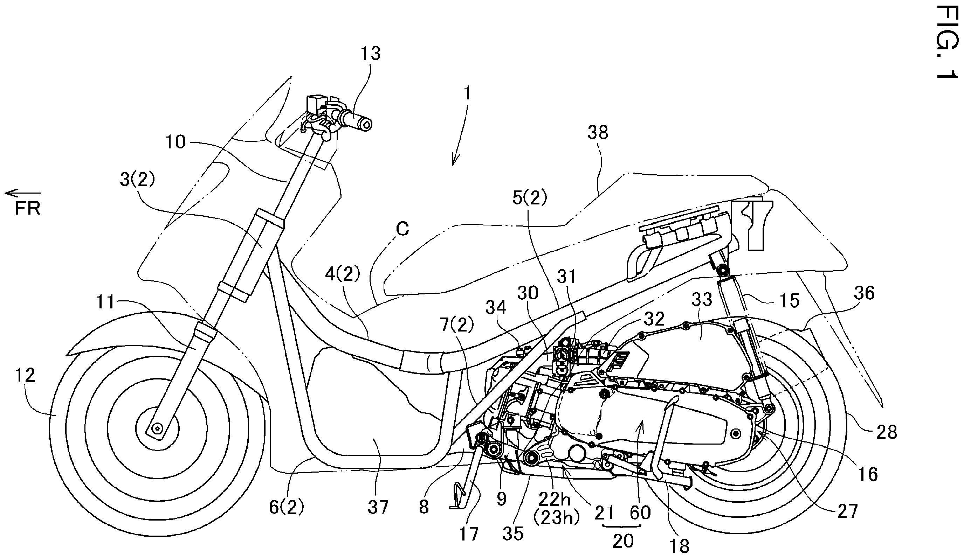

Hereinafter, an embodiment according to the present invention will be described based on Fig. 1 to Fig. 9.

Fig. 1 is a side view of a saddle-ride type motorcycle 1 according to an embodiment applied with the present invention.

Note that in the description of the present specification and claims, directions such as front and rear, and right and left, comply with normal standards with a straightly advancing direction of the saddle-ride type motorcycle 1 according to the embodiment as a forward direction.

In drawings, an arrow FR is indicative of the forward direction of a vehicle, an arrow LH is indicative of a leftward direction of the vehicle, and an arrow RH is indicative of a rightward direction of the vehicle.

In the side view of the saddle-ride type motorcycle 1 in Fig. 1, a vehicle body cover C is shown by a two-dot chain line, and a structure inside of the vehicle body cover C is shown by a solid line.

With reference to Fig. 1, a vehicle body frame 2 forming a framework of a vehicle body of the saddle-ride type motorcycle 1 is configured such that a main frame 4 extends backward and downward from a head pipe 3 located in a front portion of the vehicle body, and a pair of right and left seat rails 5, 5 is branched in a forked shape into a right side and a left side at a rear end of the main frame 4 and extends backward and upward.

In addition to the main frame 4, a pair of right and left down tubes 6, 6 extends downward from the head pipe 3. The pair of right and left down tubes 6, 6 is bent, extends backward over a floor area, is further bent upward in the back of the floor area, and is connected to front ends of the seat rails 5, 5.

The seat rails 5, 5, are supported on back stays 7, 7 with the bent portions of the down tubes 6, 6 in the back of the floor area coupled to longitudinal center portions of the seat rails 5, 5.

In a front portion of the vehicle body frame 2 as has been configured basically above, a steering stem 10 rotatably penetrates through the head pipe 3, the steering stem 10 is coupled integrally to a front fork 11 having a lower end pivotally supporting a front wheel 12, and right and left handlebars 13,13 extend upward from an upper end of the steering stem 10 while extending to the right side and the left side.

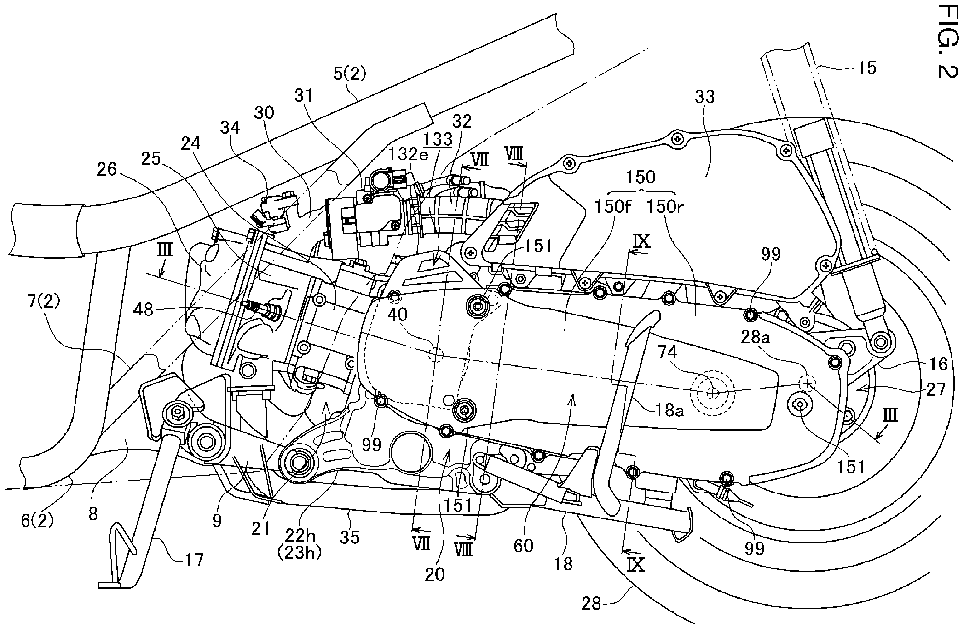

With reference to Fig. 1 and Fig. 2, supporting brackets 8, 8 project backward from the bent portions of the down tubes 6, 6 in the back of the floor area and downward from front ends of the seat rails 5, 5. A swing power unit 20 is swingably coupled to tip ends of the supporting brackets 8, 8 through a link member 9.

The power unit 20 has a front portion as a single cylinder 4-stroke OHC water-cooled internal combustion engine 21. In the internal combustion engine 21, a cylinder block 24, a cylinder head 25, and a cylinder head cover 26 are sequentially stacked and projected forward from crankcases 22, 23c with the right crankcase 22 and the left crankcase portion 23c combined with each other from side to side, the left crankcase portion 23c being located in front of the transmission case 23 long in the longitudinal direction. A cylinder axis takes a posture that is greatly inclined forward close to a horizontal position.

In the power unit 20, a V-belt continuously variable transmission 60 is provided on a left side of the transmission case 23 that has the crankcase portion 23c in the front portion and that extends backward so as to be long, and a rear wheel 28 is provided to an output shaft (rear axle) 28a of a speed reduction gear mechanism 27 provided behind the V-belt continuously variable transmission 60.

Hanger brackets 22h (23h) projecting forward from lower portions of the crankcases 22, 23c of the internal combustion engine 21 are linked/connected to the link member 9, and a rear cushion 15 is interposed between a bracket 16 projecting from a rear portion of the power unit 20 and a bracket 5b projecting from a rear portion of the seat rail 5.

An intake pipe 30 extending upward from the cylinder head 25 which is provided in the internal combustion engine 21 and is greatly inclined forward close to a horizontal position, is bent, extends backward, and is connected to a throttle body 31. The throttle body 31 is coupled through a connector pipe 32 to an air cleaner 33 disposed above the V-belt continuously variable transmission 60.

A fuel injection valve 34 is mounted to the intake pipe 30 so as to be directed to the intake port.

An exhaust pipe 35 extending downward from the cylinder head 25 is bent backward, is deflected rightward, extends backward, and is connected to a muffler 36 on a right side of the rear wheel 28.

To a periphery of a lower portion of the power unit 20, a side stand 17 is provided in a freely derricking manner with a base end of the side stand 17 journaled to a left supporting bracket 8, and also, a main stand 18 is provided in a freely derricking manner with a base end of the main stand 18 journaled to a lower portion of the longitudinal center of the V-belt continuously variable transmission 60.

Note that a fuel tank 37 is installed between the main frame 4 and the right and left down tubes 6, 6, and a seat 38 is provided above the seat rails 5, 5.

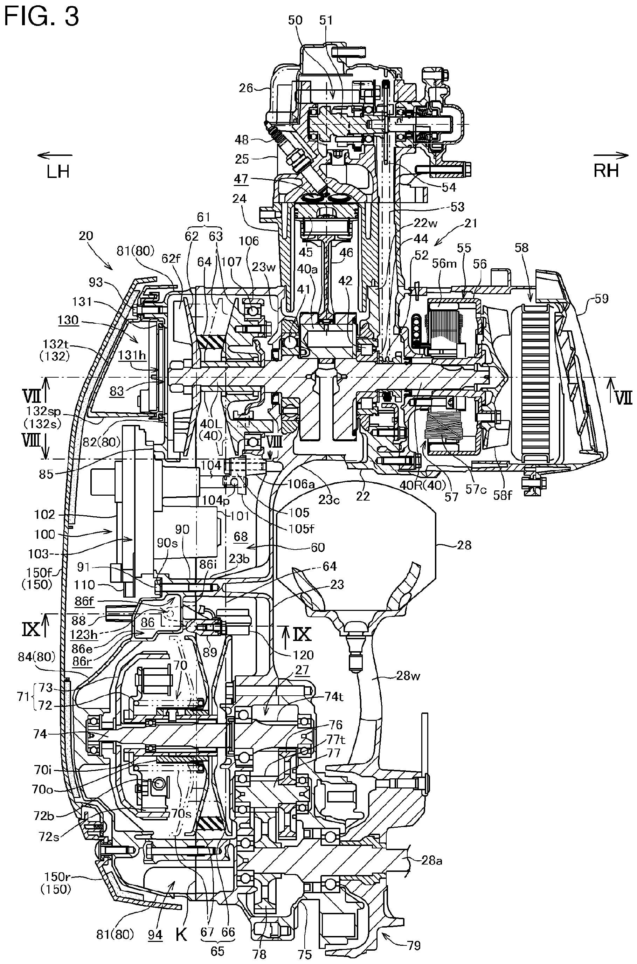

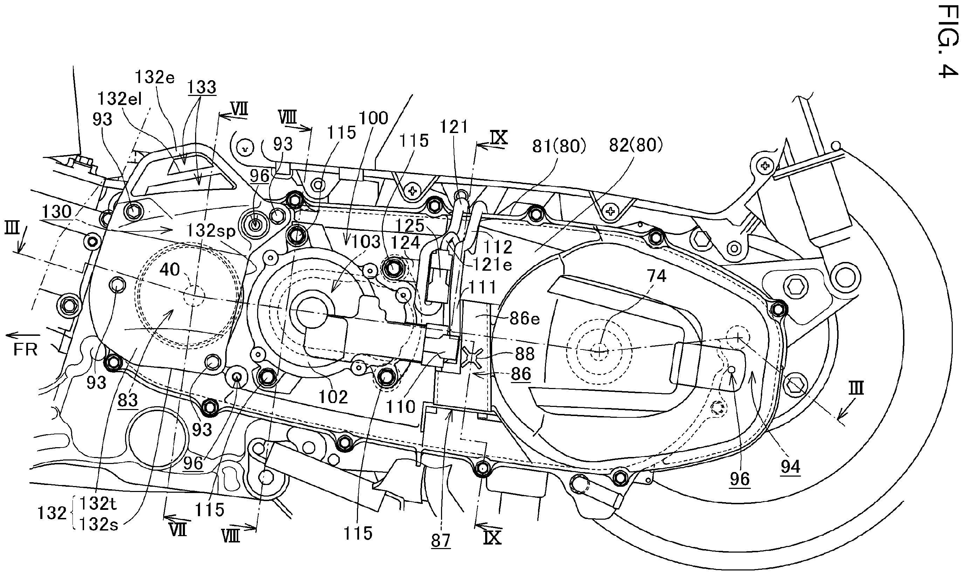

Fig. 3 is a developed view of a longitudinal section of the power unit 20 (a developed view of a longitudinal section taken along line III-III in Fig. 2 and Fig. 4).

In the internal combustion engine 21, a piston 45 reciprocating in a cylinder bore of the cylinder block 24 is coupled to a crankpin 40a of a crankshaft 40 through a connecting rod 46.

In the cylinder head 25, a combustion chamber 47 is formed so as to be opposed to a top face of the piston 45, and an ignition plug 48 is fitted and inserted so as to face the combustion chamber 47.

An OHC valve train 50 is provided on the cylinder head 25.

Left and right outer shaft portions 40L, 40R of the crankshaft 40, that extend horizontally to left and right sides, are rotatably journaled through a ball bearing 41 and a roller bearing 42 to a bearing wall 23w of the left crankcase portion 23c and a bearing wall 22w of the right outer crankcase 22 of the transmission case 23.

A cam chain drive sprocket 52 is fitted to the right shaft portion 40R of the crankshaft 40, and also a starter/generator 55 is provided at a right end of the right outer shaft portion 40R. A drive pulley 61 of the V-belt continuously variable transmission 60 is provided to the left outer shaft portion 40L.

A cam chain 53 wound around the cam chain drive sprocket 52 is wound around a cam chain driven sprocket 54 fitted to a camshaft 51 of the valve train 50, and rotation of the crankshaft 40 is transmitted to the camshaft 51.

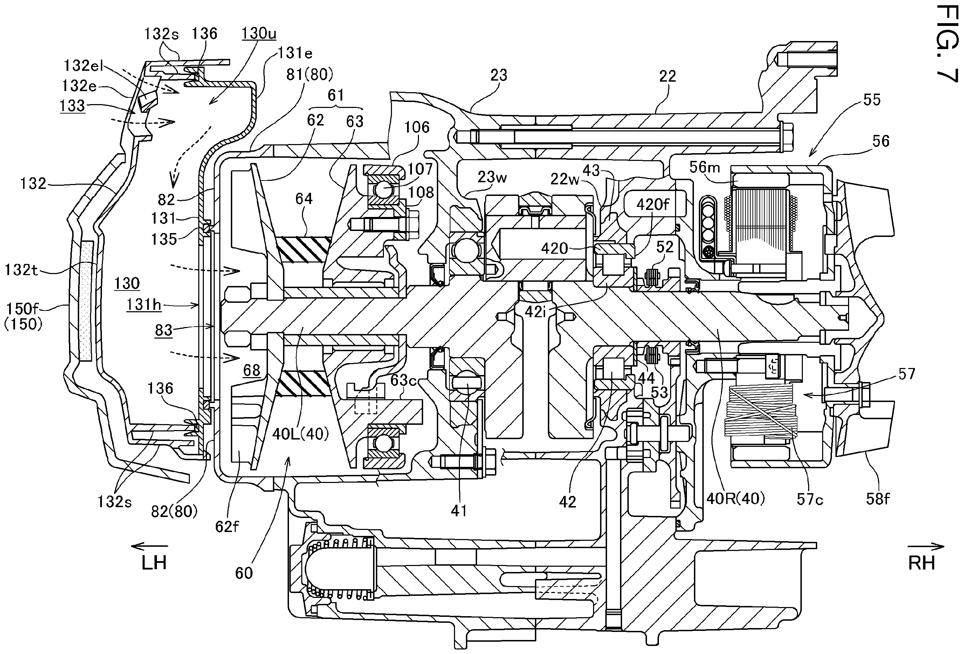

With reference to Fig. 7, the right roller bearing 42 pivotally supporting the crankshaft 40 is fixed in such a way that an outer race 42o is pressure-fitted to a casting bush 43 being cast into the bearing wall 22w of the right crankcase 22.

To an inner race 42i of the roller bearing 42, the right outer shaft portion 40R of the crankshaft 40 is fitted in a root of a crank web; however, the inner race 42i is not fixed to the right outer shaft portion 40R. The inner race 42i is push-pressed leftward by a coned disc spring 44 interposed between the cam chain drive sprocket 52 fitted to the right outer shaft portion 40R and the roller bearing 42, and pushed to a root portion of the crank web. Thereby, axial movement of the inner race 42i is suppressed, and abrasion and backlash between the inner race 42i of the roller bearing 42 and the crankshaft 40 is prevented.

Also, suppression of the axial movement of the inner race 42i with respect to the crankshaft 40 ensures a clearance between a roller of the roller bearing 42 and a diameter-reduced flange portion 42of of the outer race 42o. For this reason, abrasion and abnormal noise caused by collision and contact between both of them is prevented.

In the starter/generator 55, a bowl-shaped outer rotor 56 is fixed to the right end of the right outer shaft portion 40R of the crankshaft 40, and an inner stator 57 which is arranged inside of a magnet 56m arranged on an inner peripheral surface of the outer rotor 56 in a peripheral direction and around which a stator coil 57c is wound is fixed to a center cylindrical portion which allows penetration of the crankshaft 40 projecting from a sidewall of the right crankcase 22.

The stator/generator 55 operates as a generator, and also functions as a stator motor.

A radiator fan 58f is attached to a right surface of the outer rotor 56 and is used for cooling a radiator 58 located on the right side of the radiator fan 58f. The radiator 58 is covered with a radiator cover 59.

The drive pulley 61 of the V-belt continuously variable transmission 60, provided to the left outer shaft portion 40L of the crankshaft 40 penetrating through the bearing wall 23w of the left crankcase portion 23c is composed of a fixed drive pulley half body 62 and a movable drive pulley half body 63. The fixed drive pulley half body 62 is fixed to the left end of the crankshaft 40, and the movable drive pulley half body 63 is spline-fitted to the crankshaft 40 on the right side of the fixed drive pulley half body 62. The movable drive pulley half body 63 is rotated together with the crankshaft 40 and also is slid in the axial direction so as to approach to or separate from the fixed drive pulley half body 62. The V-belt 64 is wound and sandwiched between opposed tapered surfaces of both the drive pulley half bodies 62, 63.

A cooling fan 62f is formed to project from an opposite side surface (left surface) of the tapered surface of the fixed drive pulley half body 62.

With reference to Fig. 7, a cylindrical portion 63c with the axis of the crankshaft 40 as a center shaft is formed to project from an opposite side surface (right surface) of the tapered surface of the movable drive pulley half body 63. An inner race of a ball bearing 107 is bolted and fixed to an outer peripheral surface of the cylindrical portion 63c by a fixing member 108, and a fitting-around member 106 is fitted around an outer race of the ball bearing 107.

The fitting-around member 106 is moved in a lateral axis direction of the crankshaft 40 by a transmission motor 101 described later. Thereby, the movable drive pulley half body 63 is moved in the axial direction through the ball bearing 107 to thereby adjust a width of a groove between the fixed drive pulley half body 62 and the movable drive pulley half body 63. As a result, the winding diameter of the V-belt 64 with respect to the drive pulley 61 is changed to perform shift transmission.

In the driven pulley 65 corresponding to the drive pulley 61 and arranged on the rear side, a fixed driven pulley half body 66 is fitted to an inner sleeve 70i relatively rotatably supported with respect to a speed reduction gear input shaft 74 of a speed reduction gear mechanism 27, and a movable driven pulley half body 67 is fixed to an outer sleeve 70o relatively movably fitted around and supported by the inner sleeve 70i on the left side of the fixed driven pulley half body 66. The driven pulley 65 is composed of both the driven pulley half bodies 66, 67 (see Fig. 3).

As shown in Fig. 3, the movable driven pulley half body 67 is urged in a direction approaching the fixed driven pulley half body 66 by a spring 70s, and a torque cam mechanism 70 is incorporated between the outer sleeve 70o and the inner sleeve 70i that are integrated with the movable driven pulley half body 67.

The V-belt 64 is sandwiched between both the driven pulley half bodies 66, 67.

In this way, in the V-belt continuously variable transmission 60, when the V-belt 64 is wound around and laid over the drive pulley 61 and the driven pulley 65, and the winding diameter of the V-belt 64 with respect to the drive pulley 61 is changed by adjustment of the width of the groove of the drive pulley 61 by driving the transmission motor 101, the winding diameter with respect to the driven pulley 65 is voluntarily changed to perform shift transmission.

A centrifugal clutch 71 is provided to left portions of the speed reduction gear input shaft 74 and the inner sleeve 70i.

In the centrifugal clutch 71, a clutch outer 73 for covering a periphery of a clutch inner 72 fitted to the inner sleeve 70i is fitted to the speed reduction gear input shaft 74, and a clutch shoe 72s swinging in a centrifugal direction against a spring 72b is provided to the clutch inner 72 with the clutch shoe 72s opposed to an inner peripheral surface of the clutch outer 73.

Therefore, the power transmitted to the inner sleeve 70i through the V-belt 64 is transmitted to the speed reduction gear input shaft 74 because when the rotational speed thereof is increased, the clutch shoe 72s is swung in the centrifugal direction against the spring 72b and brought into contact with the inner peripheral surface of the clutch outer 73, and the centrifugal clutch 71 is engaged.

The left side of the transmission case 23 long in the longitudinal direction is covered with a transmission case cover 80. The V-belt continuously variable transmission 60 is provided in a belt transmission chamber 68 formed between the transmission case 23 and the transmission case cover 80, and the centrifugal clutch 71 is also stored in the belt transmission chamber 68.

The speed reduction gear input shaft 74 penetrates rightward through the transmission case 23, and has a right end formed with a speed reduction gear input tooth 74t.

Behind the speed reduction gear input tooth 74t, an intermediate shaft 77 is rotatably journaled to the transmission case 23 and a speed reduction gear case 27c. An intermediate gear 76 spline-fitted to the intermediate shaft 77 is engaged with the speed reduction gear input tooth 74t.

The intermediate shaft 77 is formed with a small-diameter intermediate tooth 77t. Further, behind the intermediate shaft 77, a rear axle 28a is rotatably journaled to the transmission case 23 and the speed reduction gear case 75. A casting wheel 28w for the rear wheel is fitted to the right end of the rear axle 28a, the right end penetrating through the speed reduction gear case 75 and projecting rightward, thereby the rear wheel 28 is attached.

A final gear 78 fitted to the rear axle 28a is engaged with the small-diameter intermediate tooth 77t of the intermediate shaft 77.

In the speed reduction gear mechanism 27 configured as described above, the power transmitted to the speed reduction gear input shaft 74 is transmitted to the rear axle 28a by performing speed reduction by a speed reduction geartrain composed of engagement of the speed reduction gear input tooth 74t with the intermediate gear 76 through the intermediate shaft 77 and engagement of the intermediate tooth 77t with the final gear 78, and then the rear wheel 28 is rotated.

Note that a hub portion of the casting wheel 28w for the rear wheel is provided with a drum brake 79 that puts a brake on the rear wheel 28.

The transmission case cover 80 for covering the left side of the transmission case 23 is mounted with a motor unit 100 for the transmission motor 101.

The left side of the transmission case cover 80 is covered with an outermost cover member 150 attached to the transmission case cover 80, and the motor unit 100 is also covered with the outermost cover member 150 (see Fig. 3).

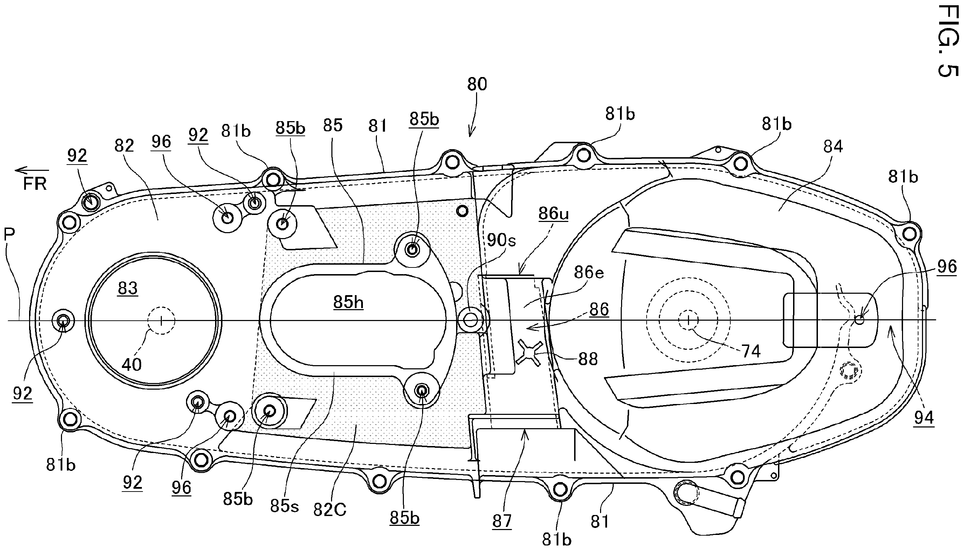

With reference to Fig. 5 showing the left side view of the transmission case cover 80 and Fig. 3 showing the longitudinal section of the transmission case cover 80, the transmission case cover 80 is substantially formed of a peripheral wall portion 81 that has a coupling face K with respect to the transmission case 23 to extend an outer periphery of the V-belt 64 toward the outer side in the vehicle width direction, and a sidewall portion 82 that extends inside from the peripheral wall portion 81 to cover the V-belt 64 from the outer side in the vehicle width direction.

The peripheral wall portion 81 is formed with a plurality of fastening boss portions 81b that bulge toward the outer peripheral side. The fastening boss portions 81b are fastened to the transmission case 23 by fastening bolts 99. Thereby, the transmission case cover 80 is attached (see Fig. 2).

A sidewall portion 82 long in the longitudinal direction, of the transmission case cover 80, has a front portion formed with a cooling air introduction port 83 as a circular opening, and has a rear portion formed with a clutch housing portion 84 that bulges leftward and that covers the centrifugal clutch 71 from the left side (see Fig. 5).

A motor unit mounting portion 85 for mounting the motor unit 100 in the vicinity of the cooling air introduction port 83 is formed in a longitudinal center portion of the transmission case cover 80, behind the cooling air introduction port 83 formed in the sidewall portion 82 and in front of the clutch housing portion 84.

The motor unit mounting portion 85 is formed at a periphery of an oblong aperture 85h long in the longitudinal direction.

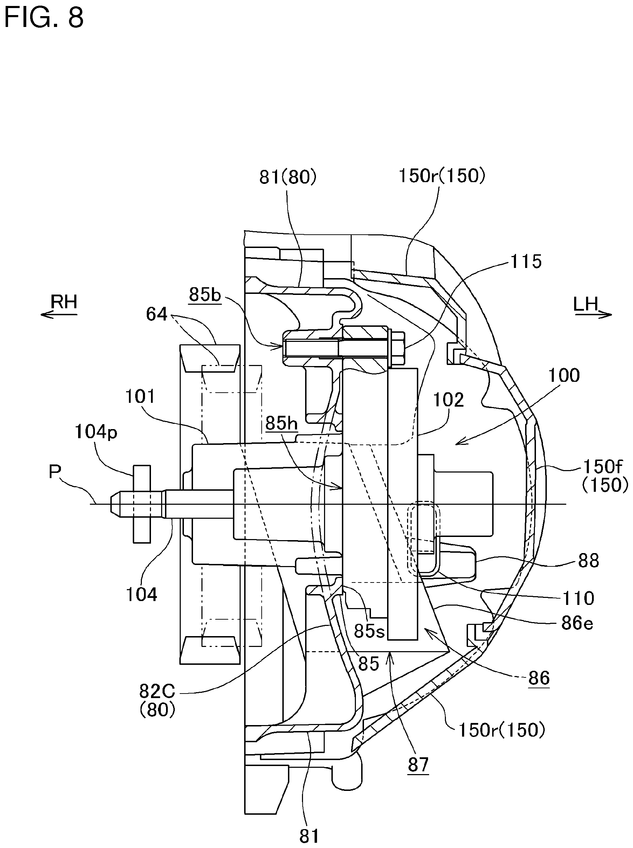

A longitudinal part of the sidewall portion 82 with the motor unit mounting portion 85 formed (a part shown by a dotted pattern in Fig. 5) is formed with a curved recessed portion 82C having a curved surface bulging to a side of the belt transmission chamber 68 (rightward) (see Fig. 8).

The curved recessed portion 82C has the curved surface curved in a direction of a vertical width of the transmission case cover 80, and the curved surface is formed over the whole vertical width of the sidewall portion 82.

The center of the vertical width of the curved recessed portion 82C is positioned in the vicinity of a plane P including both shafts. The plane P includes the axis of the crankshaft 40 as the drive shaft to which the drive pulley 61 of the V-belt continuously variable transmission 60 is journaled and the axis of the speed reduction gear input shaft 74 as the driven shaft to which the driven pulley 65 of the V-belt continuously variable transmission is journaled. A curved bottom of the curved recessed portion 82C is positioned on the plane P including both the shafts (See Fig. 4, Fig. 5, and Fig. 8).

At the curved bottom of the curved recessed portion 82C, the periphery of the oblong aperture 85h projects slightly outward (leftward), thereby the motor unit mounting portion 85 is formed. A mounting bearing surface 85s as a projecting end surface of the motor unit mounting portion 85 is formed into a vertically flat surface (see Fig. 8).

The motor unit mounting portion 85 formed with the oblong aperture 85h is in a position so as to be vertically halved by the plane P including both the shaft, the plane P including the axis of the crankshaft 40 as the drive shaft of the V-belt continuously variable transmission 60 and the axis of the speed reduction gear input shaft 74 as the driven shaft of the V-belt continuously variable transmission 60.

In the curved recessed portion 82C of the transmission case cover 80, mounting bolt holes 85b are formed behind the motor unit mounting portion 85 in the vertical direction, and mounting bolt holes 85b are obliquely formed in the front of the motor unit mounting portion 85 in the vertical direction (see Fig. 5). Hole end surfaces of the above-described four mounting bolt holes 85b are made flush with the mounting bearing surface 85s, and mounting bolts 115 are screwed into the four mounting bolt holes 85b, thereby the motor unit 100 is mounted.

The motor unit mounting portion 85 is formed at the curved bottom in the curved recessed portion 82C formed in the longitudinal center of the transmission case cover 80, and the motor unit 100 is mounted to the motor unit mounting portion 85.

Between the motor unit mounting portion 85 of the transmission case cover 80 and the clutch housing portion 84 positioned behind the motor unit mounting portion 85, an exhaust air duct 86 that extends upward cylindrically with the cooling air discharge port 87 that is opened to the outside as a lower end opening is formed in an inner surface of the sidewall portion 82 of the transmission case cover 80.

That is, the cooling air discharge port 87 for discharging cooling air in the belt transmission chamber 68 to the outside is positioned between the motor unit mounting portion 85 and the clutch housing portion 84 in the longitudinal direction.

Note that the exhaust air duct 86 is provided with an external bulging wall 86e that is formed with respect to the sidewall portion 82 and that bulges outward (leftward) in the vehicle width direction in comparison with the motor unit mounting portion 85 (see Fig. 3).

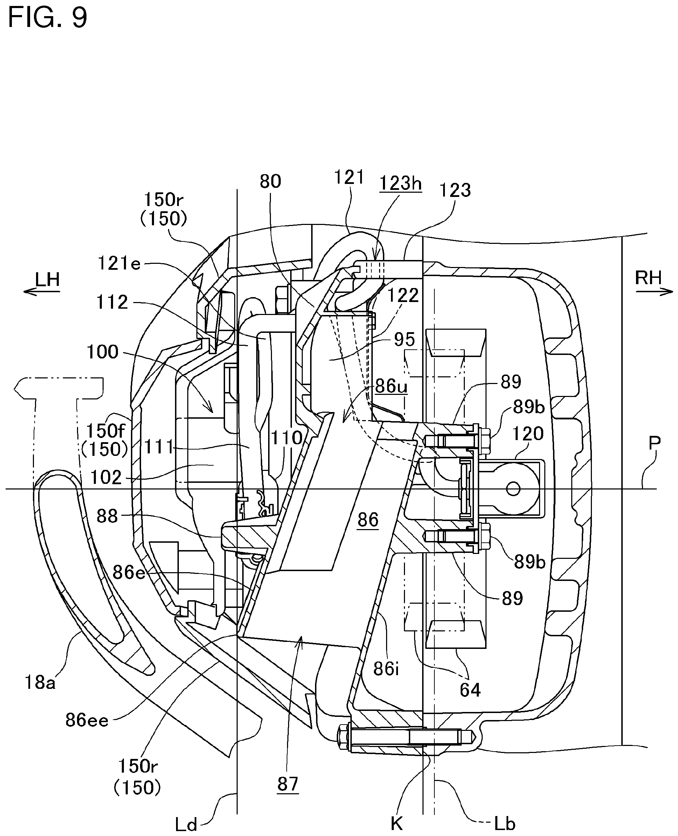

The exhaust air duct 86 has an upper end opening 86u that is opened into the belt transmission chamber 68 and that is formed in a position slightly higher than the center height of the vertical width of the sidewall portion 82 (see Fig. 9).

The exhaust air duct 86 extends downward to the slightly slant rear from the upper end opening 86u opened into the belt transmission chamber 68 and obliquely outward (leftward) in the vehicle width direction, and leads to the cooling air discharge port 87 opened to the outside (see Fig. 5 and Fig. 9).

The cooling air introduction port 83, the motor unit mounting portion 85, the exhaust air duct 86, and the clutch housing portion 84 are arranged on the plane P including both the shafts, the plane P including the axis of the crankshaft 40 as the drive shaft to which the drive pulley 61 of the V-belt continuously variable transmission 60 is journaled and the axis of the speed reduction gear input shaft 74 as the driven shaft to which the driven pulley 65 of the V-belt continuously variable transmission 60 is journaled (See Fig. 4 and Fig. 5).

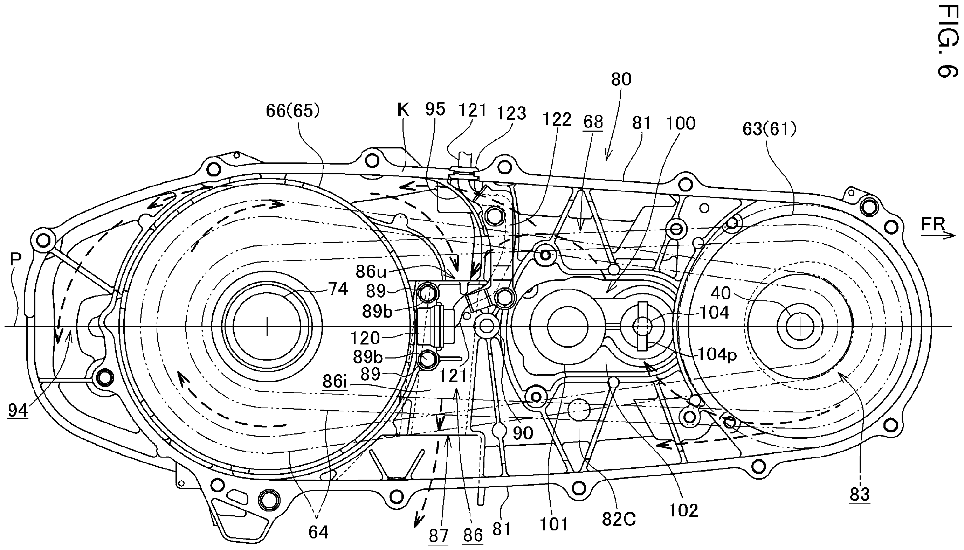

With reference to Fig. 6 showing a back side (a right side in the vehicle width direction) of the transmission case cover 80, a curved guide rib 95 is protuberantly formed on an inner surface of the sidewall portion 82 above the upper end opening 86u of the exhaust air duct 86 formed in the transmission case cover 80.

The guide rib 95 is formed in such a manner as to be arcuately curved forward and obliquely upward of the clutch outer 73 of the centrifugal clutch 71 from the peripheral wall portion 81, to extend forward and obliquely downward, and to lead to a front end edge of the upper end opening 86u of the exhaust air duct 86.

A projection 88 is protuberantly formed outward (leftward) in the vehicle width direction from the center height position of the left surface of the external bulging wall 86e of the exhaust air duct 86 (see Fig. 5 and Fig. 9).

Also, an inner sidewall 86i of the exhaust air duct 86 bulges inward (rightward) in the vehicle width direction to the vicinity of the coupling face K with respect to the transmission case 23, and a pair of upper and lower sensor mounting boss portions 89, 89 is protuberantly formed inward (rightward) in the vehicle width direction beyond the coupling face K with respect to the transmission case 23 from an upper end of the inner sidewall 86i and the center height portion (see Fig. 6 and Fig. 9).

A rotational speed sensor 120 projects by being attached by bolts 89b, 89b to the sensor mounting boss portions 89, 89 projecting from the inner surface of the transmission case cover 80.

Further, a center fastening boss portion 90 is formed on the sidewall portion 82 of the transmission case cover 80 between the motor unit mounting portion 85 and the exhaust air duct 86 so as to project inward (rightward) in the vehicle width direction to the coupling face K with respect to the transmission case 23.

The center fastening boss portion 90 abuts on the center fastening boss portion 23b projecting from a side of the transmission case 23 on the coupling face K, and a fastening bolt 91 inserted from the left side into the center fastening boss portion 90 is screwed into the center fastening boss portion 23b, thereby the transmission case cover 80 is fastened to the transmission case 23 at the center.

The exhaust air duct 86 is formed with a forwardly bulging portion 86f formed by forwardly bulging a part of the exhaust air duct 86 in the vertical direction. The forwardly bulging portion 86f overlaps in the longitudinal direction with the bolt fastening bearing surface 90s formed on the left surface of the center fastening boss portion 90 (see Fig. 3). In other words, the forwardly bulging portion 86f has a positional relationship that it overlaps with the bolt fastening bearing surface 90s when viewed in the vehicle width direction.

With reference to Fig. 3, the exhaust air duct 86 formed between the motor unit mounting portion 85 and the clutch housing portion 84 in the transmission case cover 80 is in such a position as to overlap with the centrifugal clutch 71 in the vehicle width direction in front of the centrifugal clutch 71.

The sensor mounting boss portions 89, 89 protuberantly formed from the inner sidewall 86i of the exhaust air duct 86 are positioned in front of the driven pulley 65, and the rotational speed sensor 120 protuberantly formed with respect to the sensor mounting boss portions 89,89 is positioned forward so as to be arranged close to the fixed driven pulley half body 66 on the plane P including both the shafts, the plane P including the axis of the crankshaft 40 and the axis of the speed reduction gear input shaft 74 (see Fig. 3 and Fig. 6).

The rotational speed sensor 120 is a magnetic sensor, and detects rotational speed of the fixed driven pulley half body 66 that is arranged close to the rotational speed sensor 120.

The exhaust air duct 86 is formed with a rearwardly bulging portion 86r bulging in the vertical direction so that a part of the left side approaches the centrifugal clutch 71. The rearwardly bulging portion 86r overlaps with the outer peripheral edge of the driven pulley 65 in the longitudinal direction (see Fig. 3). In other words, the rearwardly bulging portion 86r has a positional relationship that it overlaps with the outer peripheral edge of the driven pulley 65 in the vehicle width direction.

The sensor mounting boss portions 89, 89 protuberantly formed inward in the vehicle width direction so as to cross the front side of the movable driven pulley half body 67 are formed with respect to the inner sidewall 86i of the exhaust air duct 86 on the inner side of the transmission case cover 80 in the vehicle width direction. The rotational speed sensor 120 mounted to the sensor mounting boss portions 89, 89 is arranged in the belt transmission chamber 68.

With reference to Fig. 6 and Fig. 9, a sensor harness 121 extending from the rotational speed sensor 120 in the belt transmission chamber 68 extends from the front portion of the rotational speed sensor 120 toward the inner sidewall 86i of the exhaust air duct 86 on the left side, is subsequently entered into the front side of the exhaust air duct 86, extends upward beyond the front side of the guide rib 95 along the inner surface of the transmission case cover 80, and is led out through a grommet 123 fitted into a recessed portion formed in such a manner that a part of the peripheral wall portion 81 on the upper side of the transmission case cover 80 is cut away so as to be bitten from the coupling face K with respect to the transmission case 23.

With reference to Fig. 9, the coupling face K for the transmission case 23 and the transmission case cover 80 is positioned outward (leftward) in the vehicle width direction in comparison with the position in the vehicle width direction of the center line Lb in the vehicle width direction of the V-belt 64 when the winding diameter of the V-belt 64 wound around the driven pulley 65 is minimized.

The sensor harness 121 is arranged along the inner surface of the transmission case cover 80 in the belt transmission chamber 68, is pressed from the inner side in the vehicle width direction by a harness restriction plate 122 attached to the sidewall portion 82 from the inner side, and is restricted to a position along the inner surface of the transmission case cover 80 entered inward in the vehicle width direction in comparison with the coupling face K with respect to the transmission case 23 (see Fig. 9).

A harness takeoff 123h formed in the grommet 123 so as to take out the sensor harness 121 on the peripheral wall portion 81 on the upper side of the transmission case cover 80 to the outside is formed outward in the vehicle width direction in comparison with the V-belt 64 (the V-belt shown by two-dot chain line in Fig. 9) when the winding diameter of the V-belt 64 wound round the driven pulley 65 is minimized.

The sensor harness 121 thus arranged in the belt transmission chamber 68, projecting upward from the grommet 123 on the peripheral wall portion 81 on the upper side of the transmission case cover 80, and led out, is bent leftward, extends along the upper surface of the peripheral wall portion 81 on the upper side, is entered into the left surface of the sidewall portion 82, and is directed downward.

With reference to Fig. 4, above the rear of a unit case 102 of the motor unit 100 mounted to the sidewall portion 82, an electric coupler 125 is supported on a coupler supporting stay 124 co-clamped together with the unit case 102 by a mounting bolt 115. The sensor harness 121 directed downward along the left surface of the sidewall portion 82 is connected to a lower end of the electric coupler 125.

The motor harness 111 is arranged outside of the transmission case cover 80 and in the vicinity of the front of the exhaust air duct 86. As shown in Fig. 9, substantially the whole motor harness 111 is arranged inward (rightward) in the vehicle width direction in comparison with the position in the vehicle width direction (a position Ld in the vehicle width direction in Fig. 9) of the outermost side portion (the lower end of the external bulging wall 86e) 86ee of the exhaust air duct 86 in the vehicle width direction.

Note that the projection 88 projecting outward (leftward) in the vehicle width direction from the external bulging wall 86e projects further outward in the vehicle width direction in comparison with the outermost side portion 86ee of the exhaust air duct 86 in the vehicle width direction (see Fig. 9).

Further, as shown in Fig. 9, on the outer side in the vehicle width direction of the projection 88 projecting from the exhaust air duct 86, an operating arm 18a projecting from a left leg portion of the main stand 18 tipped up during traveling is positioned further outward at a distance from an outermost cover member 150.

In view of this, substantially the whole motor harness 111 including the electric coupler 110 is protected from an external factor from the outside in the vehicle width direction by the external bulging wall 86e of the exhaust air duct 86, the projection 88, and the operating arm 18a of the main stand 18.

In the motor unit 100 mounted to the motor unit mounting portion 85 formed at the curved bottom of the curved recessed portion 82C in the longitudinal center of the transmission case cover 80, a speed reduction/linear motion conversion mechanism 103 is stored in the unit case 102 having a flat hollow structure, the transmission motor 101 inputting power into the speed reduction/linear motion conversion mechanism 103 projects from one surface of the unit case 102, and a slide rod 104 perpendicularly projects from the same one surface of the unit case 102.

In the motor unit 100, when the transmission motor 101 is rotatively driven, the speed reduction/linear motion conversion mechanism 103 performs speed reduction and also performs conversion into the linear motion of the slide rod 104, then outputs as sliding of the slide rod 104.

In the motor unit 100 thus configured, the unit case 102 having the flat hollow structure with the speed reduction/linear motion conversion mechanism 103 stored is raised vertically and projects rightward with the slide rod 104 and the transmission motor 101 positioned in the longitudinal direction. With the unit case 102 taking the above-descried posture, the unit case 102 abuts on the mounting bearing surface 85s forming the vertical flat surface of the motor unit mounting portion 85 with the slide rod 104 and the transmission motor 101 inserted into the oblong aperture 85h from the outer side (left side) in the vehicle width direction. The motor unit 100 is slid and moved forward so as to allow engagement of an engagement pin 104p with a fork member 105, the engagement pin 104p and the fork member 105 being described later. Four mounting brackets 102b provided around the unit case 102 are correspondingly fastened by mounting bolts 115 to the four mounting bolt holes 85b formed in the transmission case cover 80. With this arrangement, the motor unit 100 is attached to the transmission case cover 80.

The oblong aperture 85h formed in the transmission case cover 80 is covered with the unit case 102 in the motor unit 100 from the outer side (left side) in the vehicle with direction, and the slide rod 104 and the transmission motor 101 are inserted into the belt transmission chamber 68.

The engagement pin 104p is perpendicular to, penetrates through and is retained at an end of the slide rod 104 projecting from the unit case 102 into the belt transmission chamber 68.

On the other hand, the fitting-around member 106 fitted around the movable drive pulley half body 63 through the ball bearing 107 has at the back a projecting portion 106a protuberantly formed. The fork member 105 is bolted and fixed to the projecting portion 106a. A fork portion 105f of the fork member 105 is engaged with the engagement pin 104p formed at the end of the slide rod 104.

In view of this, when the transmission motor 101 in the motor unit 100 is driven and the slide rod 104 is slid in the vehicle width direction through the speed reduction/linear motion conversion mechanism 103, the fork member 105 is moved in the vehicle width direction together with the fitting-around member 106 through the engagement of the engagement pin 104p with the fork portion 105f. For this reason, the fitting-around member 106 is moved in the vehicle width direction while the movable drive pulley half body 63 is made rotatable through the ball bearing 107, and the width of the groove between the fixed drive pulley half body 62 and the movable drive pulley half body 63 is adjusted to perform shift transmission.

Also, in the motor unit 100, the electric coupler 110 extends rearward from the unit case 102.

The electric coupler 110 covers the center fastening boss portion 90 between the motor unit mounting portion 85 and the exhaust air duct 86 and the outer side (left side) of the fastening bolt 91 in the vehicle width direction, extends from the external bulging wall 86e of the exhaust air duct 86 to the near side of the projection 88 protuberantly formed outward (leftward) in the vehicle width direction (see Fig. 3 and Fig. 4), and is provided to be positioned inward in the vehicle width direction in comparison with the left end of the projection 88 (see Fig. 9).

The motor harness 111 extends upward from the electric coupler 110, and extends upward along the sidewall portion 82 of the transmission case cover 80. An extension sensor harness 121e extending from the upper end of the electric coupler 125 connected with the sensor harness 121 is collected to the motor harness 111 in the middle of the motor harness 111 (see Fig. 9). The motor harness 111 and the extension sensor harness 121e are formed as a collected harness 112. The collected harness 112 extends further upward, is subsequently entered into the upper side of the peripheral wall portion 81, is arranged forward between the air cleaner 33 and the peripheral wall portion 81, and is connected to an unillustrated harness on the side of the vehicle body frame (see Fig. 4).

With reference to Fig. 3 and Fig. 7, an internal duct cover 131 faces the sidewall portion 82 of the front portion of the transmission case cover 80 with the cooling air introduction port 83 formed, and is jointed to the sidewall portion 82 through an annular seal member 135 arranged to surround the cooling air introduction port 83. Then, an external duct cover 132 is correspondingly covered from the left side with respect to the jointed internal duct cover 131, thereby forming an air guide duct 130.

The internal duct cover 131 is formed with an internal cover air suction port 131h corresponding to the cooling air introduction port 83 formed in the transmission case cover 80, and also has an upper extension wall 131e extending upward beyond the peripheral wall portion 81 on the upper side of the transmission case cover 80.

As shown in Fig. 7, the upper extension wall 131e of the internal duct cover 131 is formed to have a U-shaped cross section in such a manner that the upper extension wall 131e is bent from the sidewall portion 82 on the upper side of the cooling air introduction port 83 formed in the transmission case cover 80, is bent rightward along the wall surface leading to the peripheral wall portion 81 on the upper side, and bulges rightward above the peripheral wall portion 81 on the upper side.

The external duct cover 132 for covering the internal duct cover 131 from the left side is substantially formed of peripheral wall portions 132s extending leftward as a double wall from a fitting portion fitted to the periphery of the internal duct cover 131 through an annular seal member 136, and a sidewall portion 132t extending inward from the left end edge of the peripheral wall portion 132s and opposed to the internal duct cover 131.

A space surrounded by the peripheral wall portions 132s between the sidewall portion 132t of the external duct cover 132 and the internal duct cover 131 is an air guide path for the air guide duct 130. As shown in Fig. 3, the sidewall portion 132t approaches the internal duct cover 131 according as it is directed to the front side, the air guide duct 130 is formed to be tapered toward a forward direction, and in an opposite manner, the parts of the peripheral wall portions 132s, that close the rearwardly enlarged rear side of the air guide duct 130, are made to function as a partition wall 132sp for partitioning from the motor unit 100.

An outside air intake 133 formed in the air guide duct 130 and provided with a louver 132el is opened into an upper extension wall 132e opposed to the upper extension wall 131e of the internal duct cover 131 above the sidewall portion 132t of the external duct cover 132.

The outside air intake 133 is opposed to the upper extension wall 131e bulging rightward above the peripheral wall portion 81 on the upper side of the internal duct cover 131. For this reason, an outside air intake space 130u with the outside air intake 133 facing is formed to bulge inward (rightward) in the vehicle width direction above the peripheral wall portion 81 on the upper side of the internal duct cover 131.

The internal duct cover 131 and the external duct cover 132 are fastened together by mounting bolts 93 screwed into mounting bolt holes 92 (see Fig. 5) formed in two front upper and lower portions and two rear upper and lower portions of the sidewall portion 82 of the front portion of the transmission case cover 80 with the cooling air introduction port 83 formed (see Fig. 4).

When the crankshaft 40 is rotated by movement of the internal combustion engine 21 and the cooling fan 62f for the fixed drive pulley half body 62 is integrally rotated, as shown by dotted arrows in Fig. 7, the outside air is taken from the outside air intake 133 into the outside air intake space 130u, is led to the internal cover air suction port 131h formed in the internal duct cover 131 and the cooling air introduction port 83 formed in the transmission case cover 80 by the air guide duct 130, is sucked from the cooling air introduction port 83, and is introduced into the belt transmission chamber 68.

Note that a second cooling air discharge port 94 opened downward is formed behind the centrifugal clutch 71 at the rear of the belt transmission chamber 68, the second cooling air discharge port 94 being formed as a common opening for the transmission case 23 and the transmission case cover 80 (see Fig. 3 and Fig. 4).

The outer side (left side) of the transmission case cover 80 in the vehicle width direction is covered with a resin outermost cover member 150.

Mounting bolt holes 96, 96 are formed in the front upper and lower portions of the transmission case cover 80, and one mounting bolt hole 96 is formed in the rear side of the transmission case cover 80 (see Fig. 5 and Fig. 6).

With reference to Fig. 2, the outermost cover member 150 is formed in such a manner that a front cover portion 150f taperingly extending from the front to the rear is combined with a rear cover portion 150r divided into a forked shape from the rear to the front and sandwiching the tapered portion of the front cover portion 150f from the upper and lower sides. The outermost cover member 150 covers the air guide duct 130 attached in front of the transmission case cover 80 and composed of the internal duct cover 131 and the external duct cover 132, the motor unit 100 mounted in the center, and the clutch housing portion 84 at the rear from the outer side in the vehicle width direction. The outermost cover member 150 is fastened and attached (see Fig. 2) to the transmission case cover 80 by mounting bolts 151 screwed into the mounting bolt holes 96 (see Fig. 4) formed in three positions.

A part of the motor unit 100 mounted at the curved bottom of the curved recessed portion 82C of the transmission case cover 80 from the outer side in the vehicle width direction is arranged in a space formed between the curved recessed portion 82C and the outermost cover member 150.

With reference to Fig. 6, the transmission motor 101 and the slide rod 104, projecting in the belt transmission chamber 68 of the motor unit 100, and the rotational speed sensor 120 provided in the belt transmission chamber 68, are arranged on the plane P including both the shafts, the plane P including the axis of the crankshaft 40 as the drive shaft to which the drive pulley 61 of the V-belt continuously variable transmission 60 is journaled and the axis of the speed reduction gear input shaft 74 as the driven shaft to which the driven pulley 65 of the V-belt continuously variable transmission 60 is journaled. The transmission motor 101, the slide rod 104, and the rotational speed sensor 120 are arranged in a center height position between the upper rotating portion and the lower rotating portion of the V-belt 64 by effectively utilizing a space inside of the annularly rotating V-belt 64 wound between the drive pulley 61 and the driven pulley 65 (see Fig. 8 and Fig. 9).

With reference to Fig. 6, as has been described above, the cooling fan 62f for the fixed drive pulley half body 62 is rotated together with the crankshaft 40. Thereby, with reference to a cooling air flow shown by each of dashed arrows in Fig. 6, the outside air taken into the outside air intake 133, led to the air guide duct 130, and introduced from the cooling air introduction port 83 into the belt transmission chamber 68 is dragged by rotation (clockwise rotation in Fig. 6) of the drive pulley 61, flows rearward and obliquely upward from the lower portion of the drive pulley 61 so as to cross the transmission motor 101 or the like, and partially flows rearward along the peripheral wall portion 81 on the lower side of the transmission case cover 80.

The cooling air crossing the transmission motor 101 or the like and directed upward is curved to change its flow to a downward direction on the right side of the guide rib 95, is sucked into the upper end opening 86u of the exhaust air duct 86, is guided to the exhaust air duct 86, and is discharged from the cooling air discharge port 87 to the outside.

A part of the cooling air crossing the transmission motor 101 or the like and directed upward comes around behind the guide rib 95, flows rearward along the peripheral wall portion 81 on the upper side in the clutch housing portion bulging outward (leftward) in the vehicle width direction, is curved downward along the peripheral wall portion 81 on the rear side, and is discharged from the second cooling air discharge port 94 to the outside.

Also, the cooling air led to flow rearward along the peripheral wall portion 81 on the lower side of the transmission case cover 80 from the lower portion of the drive pulley 61 is led to the lower portion of the driven pulley 65, and is entrained with respect to a swirl flow caused by rotation (clockwise rotation in Fig. 6) of the driven pulley 65.

As to the swirl flow of the cooling air caused by the rotation of the driven pulley 65 and the centrifugal clutch 71, the cooling air directed forward along the peripheral wall portion 81 on the upper side of the transmission case cover 80 is guided to and sucked into the upper end opening 86u of the exhaust air duct 86 by the guide rib 95, is guided to the exhaust air duct 86, and is discharged from the cooling air discharge port 87 to the outside.

The cooling air thus introduced from the cooling air introduction port 83 into the belt transmission chamber 68 smoothly flows through the belt transmission chamber 68, and is extremely efficiently discharged from the cooling air discharge port 87 and the second cooling air discharge port 94 to the outside.

The present V-belt continuously variable transmission 60 for the saddle-ride type motorcycle 1 is configured such that the motor unit 100 for adjusting the width of the groove of the drive pulley 61 is attached to the transmission case cover 80 so that at least a part thereof is arranged in the belt transmission chamber 68. In the present V-belt continuously variable transmission, as shown in Fig. 5, the transmission case cover 80 is formed with the clutch housing portion 84 that covers the outer side of the centrifugal clutch 71 in the vehicle width direction, the motor unit mounting portion 85 that is positioned in front of the clutch housing portion 84 and that is mounted with the motor unit 100, the cooling air introduction port 83 that is positioned in front of the motor unit mounting portion 85 and that introduces the cooling air into the belt transmission chamber 68, and the cooling air discharge port 87 that is positioned between the motor unit mounting portion 85 and the clutch housing portion 84 and that discharges the cooling air in the belt transmission chamber 68 to the outside. With this arrangement, with reference to the cooling air flow shown by the dashed arrows in Fig. 6, the cooling air introduced from the cooling air introduction port 83 formed in front of the motor unit 100 mounted to the motor unit mounting portion 85 cools the drive pulley 61, and also can effectively cool the motor unit 100 behind the drive pulley 61 and the periphery of the motor unit 100.

Further, with reference to Fig. 6, the cooling air having cooled the motor unit 100 or the like and led to flow rearward is divided into the cooling air that is directly introduced as it is to the cooling air discharge port 87 arranged behind the motor unit 100 and the cooling air that is led to flow rearward with respect to the cooling air discharge port 87. The cooling air led to flow rearward with respect to the cooling air discharge port 87 cools the driven pulley 65 and the centrifugal clutch 71, is dragged by rotation of the centrifugal clutch 71, circles, is led to flow into the upper end opening 86u formed in the exhaust air duct 86 in front of the centrifugal clutch 71, is led to the exhaust air duct 86, and is discharged from the cooling air discharge port 87. For this reason, the cooling air in the belt transmission chamber 68 is extremely efficiently discharged from the cooling air discharge port 87 to the outside. Since also the introduction of the cooling air from the cooling air introduction port 83 into the belt transmission chamber 68 can be smoothly performed without any trouble, great cooling effect can be expected by an increase in a flow rate of the cooling air.

The cooling air introduction port 83 and the cooling air discharge port 87 are provided in the longitudinal direction so as to sandwich the motor unit 100 therebetween. For this reason, cooling efficiency of, especially, the motor unit 100 and the periphery thereof, can be increased.

As shown in Fig. 3, the exhaust air duct 86 that extends upward cylindrically with the cooling air discharge port 87 as the lower end opening is formed with respect to the sidewall portion 82 of the transmission case cover 80, and the exhaust air duct 86 is formed in a position where the exhaust air duct 86 overlaps with the centrifugal clutch 71 in the vehicle width direction. For this reason, enlargement of the transmission case cover 80 in the vehicle width direction can be prevented, and the sufficient bank angle of the saddle-ride type motorcycle 1 can be ensured.

In addition, the cooling air dragged by the rotation of the centrifugal clutch 71 can be easily introduced to the exhaust air duct 86.

The body of the internal combustion engine 21 is continuously provided to the front portion of the transmission case 23 to form the power unit 20, the power unit 20 is swingably provided with the front portion thereof journaled to the vehicle body frame 2 (see Fig. 2), and as shown in Fig. 5 and Fig. 6, the cooling air introduction port 83, the motor unit mounting portion 85, the exhaust air duct 86, and the clutch housing portion 84 are arranged on the plane P including the axis of the crankshaft 40 and the axis of the speed reduction gear input shaft 74. With this arrangement, the cooling air introduction port 83, the motor unit 100, the exhaust air duct 86, and the centrifugal clutch 71 are juxtaposed in the longitudinal direction. For this reason, the vertical width of the power unit 20 can be reduced, and the sufficient amount of swing of the power unit 20 can be ensured.

As shown in Fig. 3, the rearwardly bulging portion 86r formed by rearwardly bulging a part of the exhaust air duct 86 overlaps with the outer peripheral edge of the driven pulley 65 when viewed in the axis direction of the speed reduction gear input shaft 74. With this arrangement, while miniaturization of the power unit 20 in the longitudinal direction can be achieved, an increase in volume of the exhaust air duct 86 can be ensured. For this reason, exhaust air efficiency can be improved.

The bolt fastening bearing surface 90s for fastening the transmission case cover 80 and the transmission case 23 to each other is formed on the end surface of the fastening boss portion 90 that is positioned between the motor unit mounting portion 85 and the exhaust air duct 86 and that is formed to project from the inner surface of the sidewall portion 82 of the transmission case cover 80 (see Fig. 3 and Fig. 5), and the forwardly bulging portion 86f that ensures rigidity of the motor unit mounting portion 85 mounted with the motor unit 100 as the heavy load and formed by forwardly bulging a part of the exhaust air duct 86 behind the motor unit mounting portion 85 overlaps with the bolt fastening bearing surface 90s when viewed from the axis direction of the speed reduction gear input shaft 74. With this arrangement, while miniaturization of the power unit 20 in the longitudinal direction can be achieved, the increase in volume of the exhaust air duct 86 can be ensured. For this reason, the exhaust air efficiency can be improved.

As shown in Fig. 6, the rotational speed sensor 120 for detecting the rotational speed of the driven pulley 65 is attached to the transmission case cover 80. With this arrangement, both the motor unit 100 and the rotational speed sensor 120 are attached to the transmission case cover 80. For this reason, access to both the motor unit 100 and the rotational speed sensor 120 can be facilitated, and maintainability can be further improved.

As shown in Fig. 4, the second cooling air discharge port 94 for discharging the cooling air in the belt transmission chamber 68 to the outside is formed behind the centrifugal clutch 71. With this arrangement, the cooling air in the belt transmission chamber 68 is discharged from the first cooling air discharge port 87 formed between the motor unit mounting portion 85 and the clutch housing portion 84, and is also discharged from the second cooling air discharge port 94 formed behind the centrifugal clutch 71. For this reason, the exhaust air efficiency can be further improved.

The exhaust air duct 86 is provided with the external bulging wall 86e that bulges outside in the vehicle width direction in comparison with the motor unit mounting portion 85 (see Fig. 3 and Fig. 9), the motor harness 111 extending from the motor unit 100 is arranged in the vicinity of the exhaust air duct 86 on the outer side of the transmission case cover 80 (see Fig. 4), and as shown in Fig. 9, substantially the whole motor harness 111 is arranged inside in the vehicle with direction in comparison with the outermost portion 86ee of the external bulging wall 86e of the exhaust air duct 86 in the vehicle width direction. For this reason, the external bulging wall 86e of the exhaust air duct 86 can protect the motor harness 111 from the external factor from the outside in the vehicle width direction.

Note that in the embodiment, as shown in Fig. 9, the external bulging wall 86e has the projection 88 projecting further outward in the vehicle with direction in comparison with the external bulging wall 86e of the exhaust air duct 86, and also the operating arm 18a for the main stand 18 is positioned further outward in the vehicle width direction thereof. For this reason, in addition to the external bulging wall 86e, the projection 88 and the operating arm 18a for the main stand 18 protect substantially the whole motor harness 111 including the electric coupler 110 of the motor harness 111 from the external factor from the outside in the vehicle width direction.

As shown in Fig. 3, the air guide duct 130 is attached to the cooling air introduction port 83, and the air guide duct 130 is provided with the partition wall 132sp for partitioning the cooling air introduction port 83 from the motor unit 100. For this reason, when the cooling air is guided to the cooling air introduction port 83 through the air guide duct 130, the motor unit 100 can be prevented from being the resistance or the obstacle with respect to guiding of air by the partition wall 132sp, and the smooth guiding of air to the cooling air introduction port 83 can be achieved.

As shown in Fig. 7, the outside air intake 133 formed in the air guide duct 130 is formed above the cooling air introduction port 83, and the outside air intake space 130u formed on the upper side, with the outside air intake 133 facing, is formed to bulge inside in the vehicle width direction in comparison with the cooling air introduction port 83. As a result, an increase in volume of the upper portion of the outside air intake space 130u of the air guide duct 130 with the outside air intake 133 facing can be ensured. For this reason, the outside air can be smoothly taken from the outside air intake 133 into the air guide duct 130, and an increase in air volume guided to the cooling air introduction port 83 with respect to the belt transmission chamber 68 can be achieved. Consequently, the cooling air volume introduced from the cooling air introduction port 83 into the belt transmission chamber 68 can be increased and the cooling efficiency can be further improved.

The present V-belt continuously variable transmission 60 for the saddle-ride type motorcycle 1 is configured such that the motor unit 100 for adjusting the width of the groove of the drive pulley 61 is attached to the transmission case cover 80 so that at least a part thereof is arranged in the belt transmission chamber 68. In the present V-belt continuously variable transmission 60, as shown in Fig. 8 (and Fig. 5), the transmission case cover 80 is formed with the curved recessed portion 82C that has the curved surface bulging toward the side of the belt transmission chamber 68, and the motor unit 100 is attached from the outside to the curved bottom of the curved recessed portion 82C. With this arrangement, by the curved shape of the curved recessed portion 82C having the curved surface, the rigidity of the motor unit mounting portion 85 formed in the transmission case cover 80 is increased, and the high supporting strength of the motor unit 100 as the heavy load can be retained. In addition, the motor unit 100 is attached to the curved bottom of the curved recessed portion. For this reason, the amount of projection of the motor unit 100 toward the outer side in the vehicle width direction can be also suppressed, and the sufficient bank angle of the saddle-ride type motorcycle 1 can be also ensured.

Further, the motor unit 100 is attached to the curved bottom of the curved recessed portion 82C formed of the curved surface. With this arrangement, the periphery of the motor unit 100 attached to the transmission case cover 80, that is, the peripheral portion of the curved bottom of the curved recessed portion 82C can be made to serve as a wall surface extending so as to be inclined to the direction away from the motor unit 100 (see Fig. 4 and Fig. 8). For this reason, the work space can be easily ensured around the motor unit 100, and the maintainability can be further improved.

As shown in Fig. 8, the motor unit 100 is mounted on the flat surface as the mounting bearing surface 85s at the curved bottom of the curved recessed portion 82C of the transmission case cover 80. For this reason, in comparison with the case that the motor unit 100 is mounted to the curved surface part, the motor unit 100 can be easily mounted to the desired position.

The curved recessed portion 82C of the transmission case cover 80 is formed to have the curved surface that is curved in the direction of the vertical width of the transmission case cover 80 (see Fig. 8), and as shown in Fig. 5, the center of the vertical width of the curved recessed portion 82C is positioned in the vicinity of the plane P including both the axes of the crankshaft (drive shaft) 40 and the speed reduction gear input shaft (driven shaft) 74 that are arranged in the longitudinal direction. With this arrangement, as shown in Fig. 6, the motor unit 100 mounted at the curved bottom of the curved recessed portion 82C is arranged in the center height position between the upper rotating portion and the lower rotating portion of the V-belt 64 (in the vicinity of the plane P) by effectively utilizing the space inside of the V-belt 64 annularly rotating and wound between the drive pulley 61 journaled to the crankshaft (drive shaft) 40 and the driven pulley 65 journaled to the speed reduction gear input shaft (driven shaft) 74. For this reason, the motor unit 100 can be effectively prevented from interfering with the V-belt 64 fluctuated by the change in the vertical width between the upper rotating portion and the lower rotating portion of the V-belt 64 due to the shift transmission and the vibration of the V-belt 64, and also the sufficient shift transmission range can be ensured.

As shown in Fig. 3, Fig. 6, and Fig. 9, the transmission case cover 80 is provided with the peripheral wall portion 81 that has the coupling face K with respect to the transmission case 23 to extend the outer periphery of the V-belt 64 toward the outer side in the vehicle width direction, and the sidewall portion 82 that extends inside of the peripheral wall portion 81 to cover the V-belt 64 from the outer side in the vehicle width direction, and the curved recessed portion 82C is formed over the whole vertical width of the sidewall portion 82. For this reason, the high rigidity can be ensured, and also attachment and/or detachment of the motor unit 100 can be further facilitated.

As shown in Fig. 3 and Fig. 8, the outermost cover member 150 for covering the outer side of the transmission case cover 80 is attached to the transmission case cover 80, and at least a part of the motor unit 100 is arranged in the space formed between the curved recessed portion 82C and the outermost cover member 150. With this arrangement, the space between the outermost cover member 150 and the curved recessed portion 82C is enlarged by the curved recessed portion 82C, and the motor unit 100 is arranged in the enlarged space. For this reason, the outermost cover member 150 for covering the outer side of the motor unit 100 can be suppressed from bulging outside in the vehicle width direction, the bank angle of the saddle-ride type motorcycle 1 can be ensured, and the motor unit 100 can be protected from dust or the like with excellent appearance quality kept by the outermost cover member 150.

### Reference Signs List

- 1: Saddle-ride type motorcycle
- 2: Vehicle body frame
- 20: Power unit
- 21: Internal combustion engine
- 22: Right crankcase
- 23: Transmission case
- 40: Crankshaft
- 60: V-belt continuously variable transmission
- 61: Drive pulley
- 64: V-belt
- 65: Driven pulley
- 68: Belt transmission chamber
- 80: Transmission case cover
- 81: Peripheral wall portion
- 82: Sidewall portion
- 83: Cooling air introduction port
- 84: Clutch housing portion
- 85: Motor unit mounting portion
- 86: Exhaust air duct
- 86u: Upper end opening
- 87: Cooling air discharge port
- 94: Second cooling air discharge port
- 95: Guide rib
- 100: Motor unit
- 101: Transmission motor
- 102: Unit case
- 101: Electric coupler
- 111: Motor harness
- 112: Collected harness
- 120: Rotational speed sensor
- 121: Sensor harness
- 121: Extension sensor harness
- 125: Electric coupler
- 130: Air guide duct
- 130u: Outside air intake space
- 131: Internal duct cover
- 132: External duct cover
- 132sp: Partition wall
- 133: Outside air intake
- 150: Outermost cover member

## Claims

1. A V-belt continuously variable transmission for a saddle-ride type vehicle in which
a drive pulley (61) that is journaled to a drive shaft (40) directed to a vehicle width direction, a driven pulley (65) that is journaled to a driven shaft (74) arranged in parallel to the drive shaft (40), a V-belt (64) that is wound between the drive pulley (61) and the driven pulley (65), and a centrifugal clutch (71) that is journaled to the driven shaft (74) and that transmits power from the driven pulley (65) to a side of a rear wheel, are stored in a belt transmission chamber (68) formed inside by a transmission case (23) and a transmission case cover (80) for covering the transmission case (23) from an outer side in the vehicle width direction, and
a motor unit (100) that adjusts a width of a groove of the drive pulley (61) is attached to the transmission case cover (80) with at least a part of the motor unit (100) arranged within the belt transmission chamber (68),
**characterized by** the fact that the transmission case cover (80) is formed with:
a clutch housing portion (84) that covers an outer side of the centrifugal clutch (71) in the vehicle width direction;
a motor unit mounting portion (85) that is positioned in front of the clutch housing portion (84) and that is mounted with the motor unit (100);
a cooling air introduction port (83) that is positioned in front of the motor unit mounting portion (85) and that introduces cooling air into the belt transmission chamber (68); and
a cooling air discharge port (87) that is positioned between the motor unit mounting portion (85) and the clutch housing portion (84) and that discharges the cooling air in the belt transmission chamber (68) to the outside.

2. The V-belt continuously variable transmission for a saddle-ride type vehicle according to claim 1,
wherein an exhaust air duct (86) that extends upward cylindrically with the cooling air discharge port (87) as a lower end opening is formed in a sidewall portion (82) of the transmission case cover (80), and
the exhaust air duct (86) is formed in a position with the exhaust air duct (86) overlapping with the centrifugal clutch (71) in the vehicle width direction.

3. The V-belt continuously variable transmission for a saddle-ride type vehicle according to claim 2,
wherein a body of an internal combustion engine of the saddle-ride type vehicle can be continuously provided to a front portion of the transmission case (23) to form a power unit (20),
said power unit (20) being swingably provided with a front portion thereof journaled to a vehicle body frame (2) of the saddle-ride type vehicle, and
wherein the cooling air introduction port (83), the motor unit mounting portion (85), the exhaust air duct (86), and the clutch housing portion (84) are arranged on a plane (P) including an axis of the drive shaft (40) and an axis of the driven shaft (74).

4. The V-belt continuously variable transmission for a saddle-ride type vehicle according to claim 3, wherein a rearwardly bulging portion (86r) formed by rearwardly bulging a part of the exhaust air duct (86) overlaps with an outer peripheral edge of the driven pulley (65) when viewed in an axis direction of the driven shaft (74).

5. The V-belt continuously variable transmission for a saddle-ride type vehicle according to claim 3 or 4,
wherein a bolt fastening bearing surface (90s) for fastening the transmission case cover (80) and the transmission case (23) to each other is formed on an end surface of a fastening boss (90) that is positioned between the motor unit mounting portion (85) and the exhaust air duct (86) and that is formed to project from an inner surface of the sidewall portion (82) of the transmission case cover (80), and
a forwardly bulging portion (86f) formed by forwardly bulging a part of the exhaust air duct (86) overlaps with the bolt fastening bearing surface (90s) when viewed from the axis direction of the driven shaft (74).

6. The V-belt continuously variable transmission for a saddle-ride type vehicle according to any one of claims 2 to 5, wherein a rotational speed sensor (120) for detecting a rotational speed of the driven pulley (65) is attached to the transmission case cover (80).

7. The V-belt continuously variable transmission for a saddle-ride type vehicle according to any one of claims 2 to 6, wherein a second cooling air discharge port (94) for discharging the cooling air in the belt transmission chamber (68) to the outside is formed behind the centrifugal clutch (71).

8. The V-belt continuously variable transmission for a saddle-ride type vehicle according to any one of claims 2 to 7,
wherein the exhaust air duct (86) is provided with an external bulging wall (86e) that bulges outside in the vehicle width direction in comparison with the motor unit mounting portion (85),
a motor harness (111) extending from the motor unit (100) is arranged in the vicinity of the exhaust air duct (86) on an outer side of the transmission case cover (80), and
substantially the whole motor harness (111) is arranged inside in the vehicle with direction in comparison with an outermost portion (86ee) of the external bulging wall (86e) of the exhaust air duct (86) in the vehicle width direction.

9. The V-belt continuously variable transmission for a saddle-ride type vehicle according to any one of claims 1 to 8,
wherein an air guide duct (130) is attached to the cooling air introduction port (83), and
the air guide duct (130) is provided with a partition wall (132sp) for partitioning the cooling air introduction port (83) from the motor unit (100).

10. The V-belt continuously variable transmission for a saddle-ride type vehicle according to claim 9,
wherein an outside air intake (133) formed in the air guide duct (130) is formed above the cooling air introduction port (83), and
an outside air intake space (130u) with the outside air intake (133) facing is formed to bulge inside in the vehicle width direction in comparison with the cooling air introduction port (83).

11. The V-belt continuously variable transmission for a saddle-ride type vehicle according to claim 1,
wherein the transmission case cover (80) is formed with a curved recessed portion (82C) that has a curved surface bulging toward a side of the belt transmission chamber (68), and
the motor unit (100) is attached from the outside to a curved bottom of the curved recessed portion (82C).

12. The V-belt continuously variable transmission for a saddle-ride type vehicle according to claim 11, wherein the motor unit mounting portion (85) for the motor unit (100), having a mounting bearing surface (85s) formed as a flat surface, is provided at the curved bottom of the curved recessed portion (82C).

13. The V-belt continuously variable transmission for a saddle-ride type vehicle according to claim 11 or 12,
wherein the curved recessed portion (82C) is formed to have a curved surface that is curved in a direction of a vertical width of the transmission case cover (80), and
the center of the vertical width of the curved recessed portion (82C) is positioned in the vicinity of the plane (P) including both the axes of the drive shaft (40) and the driven shaft (74) that are arranged in a longitudinal direction.

14. The V-belt continuously variable transmission for a saddle-ride type vehicle according to claim 13,
wherein the transmission case cover (80) is provided with a peripheral wall portion (81) that has a coupling face (K) with respect to the transmission case (23) to extend an outer periphery of the V-belt (64) toward the outer side in the vehicle width direction, and a sidewall portion (82) that extends inside of the peripheral wall portion (81) to cover the V-belt (64) from the outer side in the vehicle width direction, and
the curved recessed portion (82C) is formed over the whole vertical width of the sidewall portion (82).

15. The V-belt continuously variable transmission for a saddle-ride type vehicle according to any one of claims 11 to 14,
wherein an outermost cover member (150) for covering the outer side of the transmission case cover (80) is attached to the transmission case cover (80), and
at least a part of the motor unit (100) is arranged in a space formed between the curved recessed portion (82C) and the outermost cover member (150).

## Patentansprüche

1. Stufenloses Keilriemengetriebe für ein Fahrzeug vom Sattel-Typ, in welchem eine Antriebsriemenscheibe (61), die auf einer in einer Fahrzeugbreitenrichtung ausgerichteten Antriebswelle (40) gelagert ist, eine angetriebene Riemenscheibe (65), welche auf einer parallel zu der Antriebswelle (40) angeordneten, angetriebenen Welle (74) gelagert ist, ein Keilriemen (64), welcher zwischen der Antriebsriemenscheibe (61) und der angetriebenen Riemenscheibe (65) aufgewickelt ist, und eine Fliehkraftkupplung (71), welche auf der angetriebenen Welle (74) gelagert ist und Kraft von der angetriebenen Riemenscheibe (65) zu einer Seite eines Hinterrads überträgt, in einer Riemengetriebekammer (68) untergebracht sind, welche innen von einem Getriebegehäuse (23) und einer Getriebegehäuseabdeckung (80) zum Abdecken des Getriebegehäuses (23) von einer äußeren Seite in der Fahrzeugbreitenrichtung ausgebildet ist, und
eine Motoreinheit (100), welche eine Breite einer Nut der Antriebsriemenscheibe (61) einstellt, an der Getriebegehäuseabdeckung (80) mit wenigstens einem Teil der Motoreinheit (100) angebracht ist, welche innerhalb der Riemengetriebekammer (68) angeordnet ist,
**dadurch gekennzeichnet, dass** die Getriebegehäuseabdeckung (80) ausgebildet ist mit:
einem Kupplungsgehäuseabschnitt (84), welcher eine äußere Seite der Fliehkraftkupplung (71) in der Fahrzeugbreitenrichtung abdeckt;
einem Motoreinheit-Montageabschnitt (85), welcher vor dem Kupplungsgehäuseabschnitt (84) positioniert ist und mit der Motoreinheit (100) montiert ist;
einer Kühllufteinleitungsöffnung (83), welche vor dem Motoreinheit-Montageabschnitt (85) positioniert ist und Kühlluft in die Riemengetriebekammer (68) einleitet; und
einer Kühlluftabführungsöffnung (87), welche zwischen dem Motoreinheit-Montageabschnitt (85) und dem Kupplungsgehäuseabschnitt (84) positioniert ist und die Kühlluft in der Riemengetriebekammer (68) nach außen abführt.

2. Stufenloses Keilriemengetriebe für ein Fahrzeug vom Sattel-Typ gemäß Anspruch 1, wobei ein Abluftkanal (86), welcher sich mit der Kühlluftabführungsöffnung (87) als eine untere Endöffnung zylindrisch nach oben erstreckt, in einem Seitenwandabschnitt (82) der Getriebegehäuseabdeckung (80) ausgebildet ist, und
der Abluftkanal (86) in einer Position mit dem mit der Fliehkraftkupplung (71) in der Fahrzeugbreitenrichtung überlappenden Abluftkanal (86) ausgebildet ist.

3. Stufenloses Keilriemengetriebe für ein Fahrzeug vom Sattel-Typ gemäß Anspruch 2,
wobei ein Körper eines Verbrennungsmotors des Fahrzeugs vom Sattel-Typ kontinuierlich zu einem vorderen Abschnitt des Getriebegehäuses (23) vorgesehen sein kann, um eine Antriebseinheit (20) auszubilden,
wobei die Antriebseinheit (20) schwingend mit einem vorderen Abschnitt davon vorgesehen ist, welcher an einem Fahrzeugkarosserierahmen (2) des Fahrzeugs vom Sattel-Typ gelagert ist, und
wobei die Kühllufteinleitungsöffnung (83), der Motoreinheit-Montageabschnitt (85), der Abluftkanal (86), und der Kupplungsgehäuseabschnitt (84) auf einer Ebene (P) angeordnet sind, die eine Achse der Antriebswelle (40) und eine Achse der angetriebenen Welle (74) umfasst.

4. Stufenloses Keilriemengetriebe für ein Fahrzeug vom Sattel-Typ gemäß Anspruch 3, wobei ein nach hinten gewölbter Abschnitt (86 r), welcher durch ein nach hinten Wölben eines Teils des Abluftkanals (86) ausgebildet ist, gesehen in einer Achsenrichtung der angetriebenen Welle (74) mit einem äußeren peripheren Rand der angetriebenen Riemenscheibe (65) überlappt.

5. Stufenloses Keilriemengetriebe für ein Fahrzeug vom Sattel-Typ gemäß Anspruch 3 oder 4,
wobei eine Bolzenbefestigungs-Lagerfläche (90s) zum Befestigen der Getriebegehäuseabdeckung (80) und des Getriebegehäuses (23) miteinander auf einer Endfläche einer Befestigungserhebung (90) ausgebildet ist, welche zwischen dem Motoreinheit-Montageabschnitt (85) und dem Abluftkanal (86) positioniert ist und ausgebildet ist, um von einer inneren Fläche des Seitenwandabschnitts (82) der Getriebegehäuseabdeckung (80) hervorzustehen, und
ein nach vorne gewölbter Abschnitt (86f), welcher durch ein nach vorne Wölben eines Teils des Abluftkanals (86) ausgebildet ist, gesehen von der Achsenrichtung der angetriebenen Welle (74) mit der Bolzenbefestigungs-Lagerfläche (90s) überlappt.

6. Stufenloses Keilriemengetriebe für ein Fahrzeug vom Sattel-Typ gemäß einem der Ansprüche 2 bis 5, wobei ein Drehgeschwindigkeitssensor (120) zum Erfassen einer Drehgeschwindigkeit der angetriebenen Riemenscheibe (65) an der Getriebegehäuseabdeckung (80) angebracht ist.

7. Stufenloses Keilriemengetriebe für ein Fahrzeug vom Sattel-Typ gemäß einem der Ansprüche 2 bis 6, wobei eine zweite Kühlluftabführungsöffnung (94) zum Abführen der Kühlluft in der Riemengetriebekammer (68) nach Außen hinter der Fliehkraftkupplung (71) ausgebildet ist.

8. Stufenloses Keilriemengetriebe für ein Fahrzeug vom Sattel-Typ gemäß einem der Ansprüche 2 bis 7, wobei der Abluftkanal (86) mit einer äußeren gewölbten Wand (86e) vorgesehen ist, welche sich im Vergleich zu dem Motoreinheit-Montageabschnitt (85) in der Fahrzeugbreitenrichtung nach außen wölbt,
ein Motorkabelbaum (111), welcher sich von der Motoreinheit (100) erstreckt, in der Nähe des Abluftkanals (86) an einer äußeren Seite der Getriebegehäuseabdeckung (80) angeordnet ist, und
im Wesentlichen der gesamte Motorkabelbaum (111) innen in der Fahrzeugbreitenrichtung im Vergleich mit einem äußersten Abschnitt (86ee) der äußeren gewölbten Wand (86e) des Abluftkanals (86) in der Fahrzeugbreitenrichtung angeordnet ist.

9. Stufenloses Keilriemengetriebe für ein Fahrzeug vom Sattel-Typ gemäß einem der Ansprüche 1 bis 8,
wobei ein Luftführungskanal (130) an der Kühlluftleinleitungsöffnung (83) angebracht ist, und der Luftführungskanal (130) mit einer Trennwand (132sp) zum Abtrennen der Kühllufteinleitungsöffnung (83) von der Motoreinheit (100) vorgesehen ist.

10. Stufenloses Keilriemengetriebe für ein Fahrzeug vom Sattel-Typ gemäß Anspruch 9, wobei ein in dem Luftführungskanal (130) ausgebildeter Außenlufteinlass (133) über der Kühllufteinleitungsöffnung (83) ausgebildet ist, und
ein Außenlufteinlassraum (130u), welcher dem Außenlufteinlass (133) zugewandt ist, ausgebildet ist, um sich im Vergleich zu der Kühllufteinleitungsöffnung (83) in der Fahrzeugbreitenrichtung nach innen zu wölben.

11. Stufenloses Keilriemengetriebe für ein Fahrzeug vom Sattel-Typ gemäß Anspruch 1, wobei die Getriebegehäuseabdeckung (80) mit einem gekrümmten Aussparungsabschnitt (82C) ausgebildet ist, welcher eine gekrümmte Fläche aufweist, die sich zu einer Seite der Riemengetriebekammer (68) wölbt, und
die Motoreinheit (100) von dem Äußeren an einem gekrümmten Boden des gekrümmten Aussparungsabschnitts (82C) befestigt ist.

12. Stufenloses Keilriemengetriebe für ein Fahrzeug vom Sattel-Typ gemäß Anspruch 11, wobei der Motoreinheit-Montageabschnitt (85) für die Motoreinheit (100), welcher eine Montagelagerfläche (85s) aufweist, die als eine ebene Fläche ausgebildet ist, an dem gekrümmten Boden des gekrümmten Aussparungsabschnitts (82C) vorgesehen ist.

13. Stufenloses Keilriemengetriebe für ein Fahrzeug vom Sattel-Typ gemäß Anspruch 11 oder 12,
wobei der gekrümmte Aussparungsabschnitt (82C) ausgebildet ist, um eine gekrümmte Fläche aufzuweisen, die in einer Richtung einer vertikalen Breite der Getriebegehäuseabdeckung (80) gekrümmt ist, und
das Zentrum der vertikalen Breite des gekrümmten Aussparungsabschnitts (82C) in der Nähe der Ebene (P) positioniert ist, welche sowohl die Achse der Antriebswelle (40) als auch die Achse der angetriebenen Welle (74) umfasst, welche in einer longitudinalen Richtung angeordnet sind.

14. Stufenloses Keilriemengetriebe für ein Fahrzeug vom Sattel-Typ gemäß Anspruch 13,
wobei die Getriebegehäuseabdeckung (80) mit einem peripheren Wandabschnitt (81), der eine Verbindungsfläche (K) hinsichtlich des Getriebegehäuses (23) aufweist, um eine äußere Peripherie des Keilriemens (64) zu der äußeren Seite in der Fahrzeugbreitenrichtung zu verlängern, und mit einem Seitenwandabschnitt (82) vorgesehen ist, welcher sich innerhalb des peripheren Wandabschnitts (81) erstreckt, um den Keilriemen (64) von der äußeren Seite in der Fahrzeugbreitenrichtung abzudecken, und
wobei der gekrümmte Aussparungsabschnitt (82C) über die gesamte vertikale Breite des Seitenwandabschnitts (82) ausgebildet ist.

15. Stufenloses Keilriemengetriebe für ein Fahrzeug vom Sattel-Typ gemäß einem der Ansprüche 11 bis 14,
wobei ein äußerstes Abdeckelement (150) zum Abdecken der äußeren Seite der Getriebegehäuseabdeckung (80) an der Getriebegehäuseabdeckung (80) angebracht ist, und
wenigstens ein Teil der Motoreinheit (100) in einem Raum angeordnet ist, der zwischen dem gekrümmten Aussparungsabschnitt (82C) und dem äußersten Abdeckelement (150) ausgebildet ist.

## Revendications

1. Transmission variable continue à courroie trapézoïdale pour véhicule de type à enfourcher dans laquelle
une poulie d'entraînement (61) qui est tourillonnée sur un arbre d'entraînement (40) orienté dans un sens de la largeur d'un véhicule, une poulie entraînée (65) qui est tourillonnée sur un arbre entraîné (74) agencé en parallèle à l'arbre d'entraînement (40), une courroie trapézoïdale (64) qui est enroulée entre la poulie d'entraînement (61) et la poulie entraînée (65), et un embrayage centrifuge (71) qui est tourillonné sur l'arbre entraîné (74) et qui transmet une puissance de la poulie entraînée (65) à un côté d'une roue arrière, sont stockés dans une chambre de transmission à courroie (68) formée à l'intérieur par un carter de transmission (23) et un couvercle de carter de transmission (80) pour couvrir le carter de transmission (23) depuis un côté externe dans le sens de la largeur du véhicule, et
une unité de moteur (100) qui ajuste une largeur d'une gorge de la poulie d'entraînement (61) est attachée au couvercle de carter de transmission (80) avec au moins une partie de l'unité de moteur (100) agencée à l'intérieur de la chambre de transmission à courroie (68),
**caractérisée par le fait que** le couvercle de carter de transmission (80) est formé avec
une partie de logement d'embrayage (84) qui couvre un côté externe de l'embrayage centrifuge (71) dans le sens de la largeur du véhicule ;
une partie de montage d'unité de moteur (85) qui est positionnée en face de la partie de logement d'embrayage (84) et qui est reçoit l'unité de moteur (100) ;
un orifice d'introduction d'air de refroidissement (83) qui est positionné en face de la partie de montage d'unité de moteur (85) et qui introduit de l'air de refroidissement dans la chambre de transmission à courroie (68) ; et
un orifice de décharge d'air de refroidissement (87) qui est positionné entre la partie de montage d'unité de moteur (85) et la partie de logement d'embrayage (84) et qui décharge l'air de refroidissement dans la chambre de transmission à courroie (68) vers l'extérieur.

2. Transmission variable continue à courroie trapézoïdale pour un véhicule de type à enfourcher selon la revendication 1,
dans laquelle un conduit d'air d'échappement (86) qui s'étend vers le haut de façon cylindrique avec l'orifice de décharge d'air de refroidissement (87) en tant qu'ouverture d'extrémité inférieure est formé dans une partie de paroi latérale (82) du couvercle de carter de transmission (80), et
le conduit d'air d'échappement (86) est formé dans une position avec le conduit d'air d'échappement (86) se superposant à l'embrayage centrifuge (71) dans le sens de la largeur du véhicule.

3. Transmission variable continue à courroie trapézoïdale pour un véhicule de type à enfourcher selon la revendication 2,
dans laquelle un corps d'un moteur à combustion interne du véhicule de type à enfourcher peut être prévu de manière continue sur une partie avant du carter de transmission (23) pour former une unité motrice (20),
ladite unité motrice (20) étant prévue de manière pivotante avec une partie avant de celle-ci tourillonnée sur un cadre de corps de véhicule (2) du véhicule de type à enfourcher, et
dans laquelle l'orifice d'introduction d'air de refroidissement (83), la partie de montage d'unité de moteur (85), le conduit d'air d'échappement (86), et la partie de logement d'embrayage (84) sont agencés sur un plan (P) comportant un axe de l'arbre d'entraînement (40) et un axe de l'arbre entraîné (74).

4. Transmission variable continue à courroie trapézoïdale pour un véhicule de type à enfourcher selon la revendication 3, dans laquelle une partie bombée vers l'arrière (86r) formée en bombant vers l'arrière une partie du conduit d'air d'échappement (86) se superpose à un bord périphérique externe de la poulie entraînée (65) lorsqu'elle est vue dans un sens de l'axe de l'arbre entraîné (74).

5. Transmission variable continue à courroie trapézoïdale pour un véhicule de type à enfourcher selon la revendication 3 ou 4,
dans laquelle une surface d'appui de fixation à boulon (90s) pour fixer le couvercle de carter de transmission (80) et le carter de transmission (23) l'un à l'autre est formée sur une surface d'extrémité d'un bossage de fixation (90) qui est positionné entre la partie de montage d'unité de moteur (85) et le conduit d'air d'échappement (86) et qui est formé de sorte à faire saillie à partir d'une surface interne de la paroi latérale (82) du couvercle de carter de transmission (80), et
une partie bombée vers l'avant (86f) formée en bombant vers l'avant une partie du conduit d'air d'échappement (86) se superpose à la surface d'appui de fixation à boulon (90s) lorsqu'elle est vue depuis le sens de l'axe de l'arbre entraîné (74).

6. Transmission variable continue à courroie trapézoïdale pour un véhicule de type à enfourcher selon l'une quelconque des revendications 2 à 5, dans laquelle un capteur de vitesse de rotation (120) pour détecter une vitesse de rotation de la poulie entraînée (65) est attaché au couvercle de carter de transmission (80).

7. Transmission variable continue à courroie trapézoïdale pour un véhicule de type à enfourcher selon l'une quelconque des revendications 2 à 6, dans laquelle un second orifice de décharge d'air de refroidissement (94) pour décharger l'air de refroidissement dans la chambre de transmission à courroie (68) vers l'extérieur est formé à l'arrière de l'embrayage centrifuge (71).

8. Transmission variable continue à courroie trapézoïdale pour un véhicule de type à enfourcher selon l'une quelconque des revendications 2 à 7,
dans laquelle le conduit d'air d'échappement (86) est pourvu d'une paroi renflée externe (86e) qui est bombée vers l'extérieur dans le sens de la largeur du véhicule par rapport à la partie de montage d'unité de moteur (85),
un harnais de moteur (111) s'étendant à partir de l'unité de moteur (100) est agencé au voisinage du conduit d'air d'échappement (86) sur un côté externe du couvercle de carter de transmission (80), et
sensiblement l'ensemble du harnais de moteur (111) est agencé à l'intérieur du véhicule selon un sens par rapport à une partie le plus à l'extérieur (86ee) de la paroi bombée externe (86e) du conduit d'air d'échappement (86) dans le sens de la largeur du véhicule.

9. Transmission variable continue à courroie trapézoïdale pour un véhicule de type à enfourcher selon l'une quelconque des revendications 1 à 8,
dans laquelle un conduit de guidage d'air (130) est attaché à l'orifice d'introduction d'air de refroidissement (83), et
le conduit de guidage d'air (130) est pourvu d'une paroi de séparation (132sp) pour séparer l'orifice d'introduction d'air de refroidissement (83) de l'unité de moteur (100).

10. Transmission variable continue à courroie trapézoïdale pour un véhicule de type à enfourcher selon la revendication 9,
dans laquelle l'admission d'air extérieur (133) formée dans le conduit de guidage d'air (130) est formée au-dessus de l'orifice d'introduction d'air d'échappement (83), et
un espace d'admission d'air extérieur (130u) auquel fait face l'admission d'air extérieur (133) est formé de sorte à bomber à l'intérieur dans le sens de la largeur du véhicule par rapport à l'orifice d'introduction d'air de refroidissement (83).

11. Transmission variable continue à courroie trapézoïdale pour un véhicule de type à enfourcher selon la revendication 1,
dans laquelle le couvercle de carter de transmission (80) est formé d'une partie en retrait incurvée (82C) qui possède une surface incurvée bombant vers un côté de la chambre de transmission à courroie (68), et
l'unité de moteur (100) est attachée depuis l'extérieur à un fond incurvé de la partie en retrait incurvée (82C).

12. Transmission variable continue à courroie trapézoïdale pour un véhicule de type à enfourcher selon la revendication 11, dans laquelle la partie de montage d'unité de moteur (85) pour l'unité de moteur (100), ayant une surface d'appui de montage (85s) formée sous la forme d'une surface plane, est prévue au niveau du fond incurvé de la partie en retrait incurvée (82C).

13. Transmission variable continue à courroie trapézoïdale pour un véhicule de type à enfourcher selon la revendication 11 ou 12,
dans laquelle la partie en retrait incurvée (82C) est formée pour avoir une surface incurvée qui est incurvée dans un sens d'une largeur verticale du couvercle de carter de transmission (80), et
le centre de la largeur verticale de la partie en retrait incurvée (82C) est positionné au voisinage du plan (P) comportant à la fois les axes de l'arbre d'entraînement (40) et de l'arbre entraîné (74) qui sont agencés dans un sens longitudinal.

14. Transmission variable continue à courroie trapézoïdale pour un véhicule de type à enfourcher selon la revendication 13,
dans laquelle le couvercle de carter de transmission (80) est pourvu d'une partie de paroi périphérique (81) qui possède une face de couplage (K) par rapport au carter de transmission (23) pour étendre une périphérie externe de la courroie trapézoïdale (64) vers le côté externe dans le sens de la largeur du véhicule, et une partie de paroi latérale (82) qui s'étend vers l'intérieur de la partie de paroi périphérique (81) pour couvrir la courroie trapézoïdale (64) depuis le côté externe dans le sens de la largeur du véhicule, et
la partie en retrait incurvée (82C) est formée sur l'ensemble de la largeur verticale de la partie de paroi latérale (82).

15. Transmission variable continue à courroie trapézoïdale pour un véhicule de type à enfourcher selon l'une quelconque des revendications 11 à 14,
dans laquelle un élément de couvercle externe (150) pour couvrir le côté externe du couvercle de carter de transmission (80) est attaché au couvercle de carter de transmission (80), et
au moins une partie de l'unité de moteur (100) est agencée dans un espace formé entre la partie en retrait incurvée (82C) et l'élément de couvercle le plus à l'extérieur (150).
